# EUROPEAN PATENT APPLICATION

(11) **EP 4 435 036 A1**
(43) Date of publication of application: **25.09.2024**
(21) Application number: 22895227.1
(22) Date of filing: 20.09.2022
(51) Int. Cl.: C08G 69/28, C08G 69/30, C08L 77/06

(54) **METHOD FOR MANUFACTURING POLYAMIDE RESIN, AND RESIN COMPOSITION**

(30) Priority: 18.11.2021 JP 2021187868
(71) Applicant: MITSUBISHI GAS CHEMICAL COMPANY, INC., Chiyoda-ku Tokyo 100-8324 (JP)
(72) Inventor: OTSUKA, Kosuke, Hiratsuka-shi, Kanagawa 254-0016 (JP); OKAJIMA, Yuya, Hiratsuka-shi, Kanagawa 254-0016 (JP)
(74) Representative: Vossius & Partner Patentanwälte Rechtsanwälte mbB
(86) International application number: PCT/JP2022/034922
(87) International publication number: WO 2023/089941

(57) **Abstract**

Provided is a production method of a polyamide resin resulting from polycondensation of a diamine represented by Formula (1) and an aliphatic dicarboxylic acid includes polycondensing a diamine and a dicarboxylic acid in the presence of water to make a primary polycondensate and increasing a degree of polymerization of the primary polycondensate, wherein more than 30 mol% of the diamine is a diamine represented by Formula (1) and 20 mol% or more of the dicarboxylic acid is an aromatic dicarboxylic acid. where in Formula (1), R¹ to R⁸ each independently represent a hydrogen atom or an aliphatic group having from 1 to 5 carbons: X1 and X2 are each independently 1 or 2.

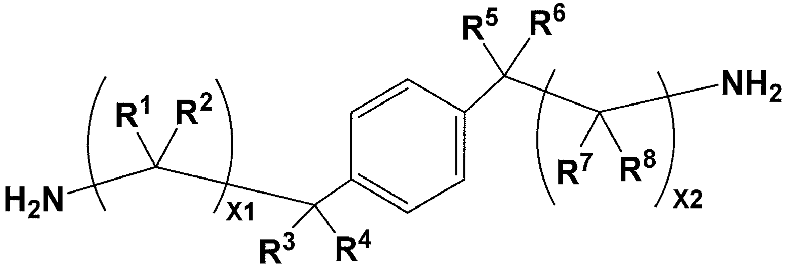

## Description

### Technical Field

The present invention relates to a production method of a polyamide resin and a resin composition.

### Background Art

Polyamide resins exhibit excellent properties such as processability, durability, thermal resistance, gas barrier properties, and chemical resistance, and thus are widely used as various industrial materials.

As such polyamide resins, aliphatic polyamide resins typified by polyamide 6 and polyamide 66 have been used for many years. Furthermore, aromatic polyamide resins in which aromatic dicarboxylic acids and/or aromatic diamines are used as the raw materials of the polyamide resins are also being used. Such aromatic polyamide resins are described in Patent Documents 1 and 2, for example.

### Citation List

### Patent Documents

Patent Document 1: JP 62-054725 A
Patent Document 2: JP 08-003312 A

### Summary of Invention

### Technical Problem

The present inventors developed a polyamide resin resulting from polycondensation of a diamine represented by Formula (1) and a dicarboxylic acid. As such, a novel method of producing such a polyamide resin is sought after. 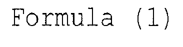 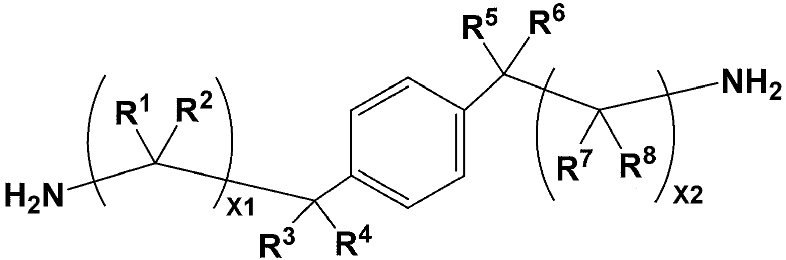 where in Formula (1), R¹ to R⁸ each independently represent a hydrogen atom or an aliphatic group having from 1 to 5 carbons; X1 and X2 are each independently 1 or 2.

The present invention aims to solve the problem, and an object of the present invention is to provide a novel production method of a polyamide resin resulting from polycondensation of a diamine represented by Formula (1) and a dicarboxylic acid.

Another object of the present invention is to disclose a resin composition containing the polyamide resin resulting from the production method or the like.

### Solution to Problem

As a result of investigations made by the present inventors in view of the above problem, the present inventors found that an excellent polyamide resin can result from polycondensing a diamine including the diamine represented by Formula (1) and a dicarboxylic acid in the presence of water to make a primary polycondensate and increasing the degree of polymerization of the primary polycondensate.

Specifically, the issue described above is solved by the following solutions.
<1> A production method of a polyamide resin, the method including polycondensing a diamine and a dicarboxylic acid in the presence of water to make a primary polycondensate and increasing a degree of polymerization of the primary polycondensate, wherein more than 30 mol% of the diamine is a diamine represented by Formula (1) and 20 mol% or more of the dicarboxylic acid is an aromatic dicarboxylic acid. 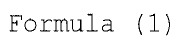 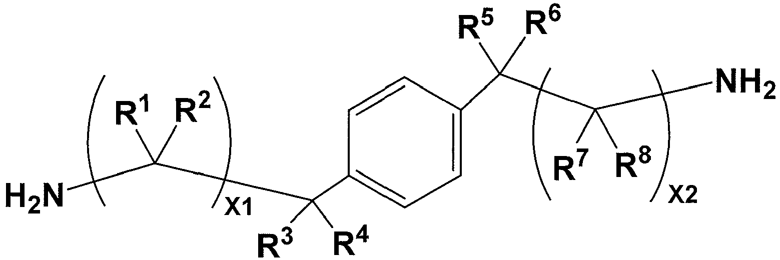 where in Formula (1), R¹ to R⁸ each independently represent a hydrogen atom or an aliphatic group having from 1 to 5 carbons; X1 and X2 are each independently 1 or 2.
<2> The production method according to <1>, wherein stirring in the polycondensation is performed using a stirring blade and with a sealing liquid disposed between a shaft of the stirring blade and a top plate of a reaction vessel to form a seal.
<3> The production method of a polyamide resin according to <1> or <2>, the method including adding the diamine and the dicarboxylic acid to a polycondensation reaction system at the same time.
<4> The production method of a polyamide resin according to any one of <1> to <3>, wherein the amount of water added to the polycondensation reaction system is from 28 to 80 mass% relative to a total amount of substances present in the polycondensation reaction system.
<5> The production method according to any one of <1> to <4>, the method including removing a part of the water from the polycondensation reaction system and further allowing the polycondensation to proceed.
<6> The production method according to any one of <1> to <5>, wherein the degree of polymerization of the primary polycondensate is increased by solid phase polymerization.
<7> The production method according to any one of <1> to <6>, wherein the polyamide resin includes diamine-derived structural units and dicarboxylic acid-derived structural units, with 50 mol% or more of the diamine-derived structural units being structural units derived from p-benzenediethanamine and 65 mol% or more of the dicarboxylic acid-derived structural units being structural units derived from an aromatic dicarboxylic acid. <8> The production method according to <7>, wherein from 65 to 97 mol% of the dicarboxylic acid-derived structural units are structural units derived from an aromatic dicarboxylic acid, and from 3 to 35 mol% of the dicarboxylic acid-derived structural units are structural units derived from an alicyclic dicarboxylic acid.
<9> The production method according to any one of <1> to <6>, wherein the polyamide resin includes diamine-derived structural units and dicarboxylic acid-derived structural units, with 50 mol% or more of the diamine-derived structural units being structural units derived from p-benzenediethanamine, 20 mol% or more and less than 95 mol% of the dicarboxylic acid-derived structural units being structural units derived from an aromatic dicarboxylic acid, and more than 5 mol% and 80 mol% or less of the dicarboxylic acid-derived structural units being structural units derived from an α,ω-linear aliphatic dicarboxylic acid having from 4 to 15 carbons.
<10> The production method according to <9>, wherein more than 5 mol% and 80 mol% or less of the dicarboxylic acid-derived structural units are structural units derived from a dicarboxylic acid selected from adipic acid and sebacic acid.
<11> The production method according to <9>, wherein from 40 to 90 mol% of the dicarboxylic acid-derived structural units are structural units derived from an aromatic dicarboxylic acid, and from 10 to 60 mol% of the dicarboxylic acid-derived structural units are structural units derived from an α,ω-linear aliphatic dicarboxylic acid having from 4 to 15 carbons.
<12> The production method according to any one of <1> to <6>, wherein the polyamide resin includes diamine-derived structural units and dicarboxylic acid-derived structural units, from 70 to 97 mol% of the diamine-derived structural units being structural units derived from p-benzenediethanamine, from 3 to 30 mol% of the diamine-derived structural units being structural units derived from a diamine represented by Formula (1-1), and 50 mol% or more of the dicarboxylic acid-derived structural units being structural units derived from an aromatic dicarboxylic acid. 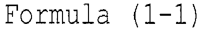 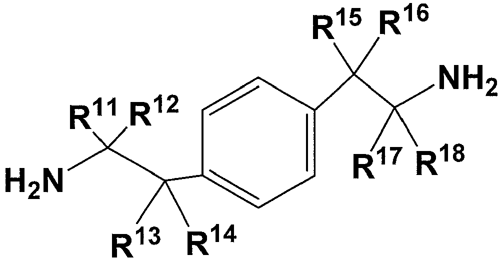 where in Formula (1-1), R¹¹ to R¹⁸ each independently represent a hydrogen atom or an aliphatic group having from 1 to 5 carbons, and at least one of R¹¹ to R¹⁴ and at least one of R¹⁵ to R¹⁸ are each an aliphatic group having from 1 to 5 carbons.
<13> The production method according to any one of <1> to <6>, wherein the polyamide resin includes diamine-derived structural units and dicarboxylic acid-derived structural units, with more than 30 mol% of the diamine-derived structural units being structural units derived from a diamine represented by Formula (1-1) and more than 30 mol% of the dicarboxylic acid-derived structural units being structural units derived from an aromatic dicarboxylic acid. 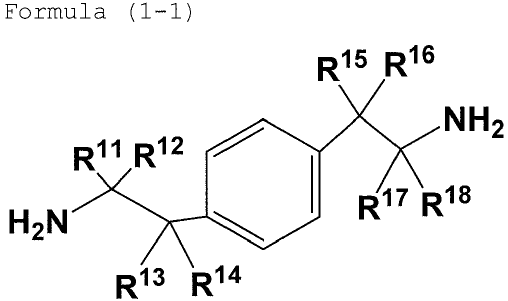 where in Formula (1-1), R¹¹ to R¹⁸ each independently represent a hydrogen atom or an aliphatic group having from 1 to 5 carbons, and at least one of R¹¹ to R¹⁴ and at least one of R¹⁵ to R¹⁸ are each an aliphatic group having from 1 to 5 carbons.
<14> The production method according to any one of <1> to <6>, wherein the polyamide resin includes diamine-derived structural units and dicarboxylic acid-derived structural units, with 50 mol% or more of the diamine-derived structural units being structural units derived from a compound represented by Formula (1-2) and more than 50 mol% of structural units of the dicarboxylic acid being structural units derived from an aromatic dicarboxylic acid. 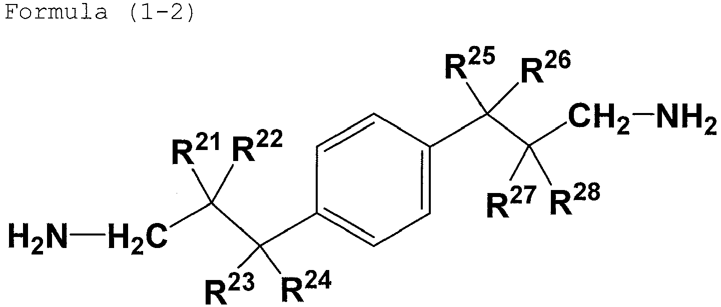 where in Formula (1-2), R²¹ to R²⁸ each independently represent a hydrogen atom or an aliphatic group having from 1 to 5 carbons.
<15> A resin composition including a polyamide resin and a reinforcing material, the polyamide resin including diamine-derived structural units and dicarboxylic acid-derived structural units, with more than 30 mol% of the diamine-derived structural units being structural units represented by Formula (1) and 20 mol% or more of the dicarboxylic acid-derived structural units being structural units derived from an aromatic dicarboxylic acid. 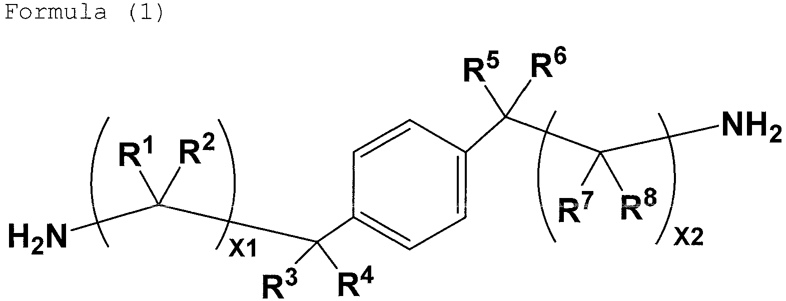 where in Formula (1), R¹ to R⁸ each independently represent a hydrogen atom or an aliphatic group having from 1 to 5 carbons; X1 and X2 are each independently 1 or 2.

### Advantageous Effects of Invention

The present invention can provide a novel production method of a polyamide resin resulting from polycondensation of a diamine represented by Formula (1) and a dicarboxylic acid.

The present invention also provides a resin composition containing the polyamide resin resulting from the production method or the like.

### Description of Embodiments

Hereinafter, embodiments for conducting the present invention (referred to simply as "the present embodiment" below) will be described in detail. Note that the present embodiment below is an example for describing the present invention, and the present invention is not limited to the present embodiment.

In the present specification, "from ... to ..." or "of ... to ..." is used to mean that the numerical values described before and after "to" are included as the lower limit and the upper limit, respectively.

In the present specification, various physical property values and characteristic values are values at 23°C unless otherwise noted.

The term "step" in the present specification includes not only an independent step, but also a case in which the desired action of a step is achieved, though the step cannot be clearly differentiated from another step.

When a measurement method and the like explained in the standards described in the present specification differs depending on the year, it is deemed as based on the standards on January 1, 2021 unless otherwise stated.

Pressure in the present specification is a value based on absolute pressure (0 MPa in vacuum) unless otherwise specified.

A method for producing a polyamide resin according to the present embodiment includes polycondensing a diamine and a dicarboxylic acid in the presence of water to make a primary polycondensate and increasing a degree of polymerization of the primary polycondensate, wherein more than 30 mol% (preferably more than 57 mol%) of the diamine is a diamine represented by Formula (1) and 20 mol% or more of the dicarboxylic acid is an aromatic dicarboxylic acid, 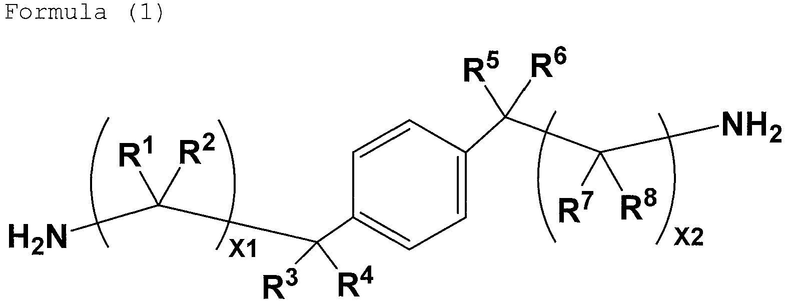 where in Formula (1), R¹ to R⁸ each independently represent a hydrogen atom or an aliphatic group having from 1 to 5 carbons; X1 and X2 are each independently 1 or 2.

A polyamide resin resulting from polycondensation of a diamine represented by Formula (1) and an aliphatic dicarboxylic acid can be produced by a novel method. In particular, mass production of the polyamide resin becomes possible. In addition, the resulting polyamide resin has a relatively high molecular weight.

The method for producing a polyamide resin according to the present embodiment includes polycondensing a diamine and a dicarboxylic acid in the presence of water to make a primary polycondensate. The term "water" as used herein is not condensed water produced by the polycondensation reaction between a diamine and a dicarboxylic acid, but rather means water that is added to the polycondensation reaction system; in the presence of the added water, the polycondensation reaction between a diamine and a dicarboxylic acid is initiated.

In the present specification, of a step (polycondensation reaction step) in which a diamine and a dicarboxylic acid are subjected to polycondensation in the presence of water to make a primary polycondensate, the duration before a water removal step may be referred to as an early-stage polycondensation step, and the duration after the water removal step until the primary polycondensate is produced may be referred to as a late-stage polycondensation step.

More than 30 mol% of the diamine that serves as a raw material of the polyamide resin and that is used in the method for producing the present embodiment is the diamine represented by Formula (1). A preferable composition of the diamine is selected as appropriate depending on the composition of the polyamide resin described in detail later. In addition, 20 mol% or more of the dicarboxylic acid is an aromatic dicarboxylic acid. A preferable composition of the dicarboxylic acid is also selected as appropriate according to the composition of the polyamide resin described in detail below.

In the method for producing the present embodiment, the diamine and the dicarboxylic acid are preferably added to the polycondensation reaction system at the same time. The phrase "added at the same time" means not only addition completely at the same time but also addition with a very small time difference. That is, the phrase "added at the same time" means the diamine and the dicarboxylic acid being added to the polycondensation reaction system in the same time period, and does not mean either the diamine or the dicarboxylic acid being added to the polycondensation reaction system and then the other being added later on.

The step of carrying out polycondensation in the presence of water to make a primary polycondensate is preferably carried out by placing the diamine and the dicarboxylic acid into a reaction vessel such as an autoclave and allowing the polycondensation to proceed while stirring. The interior of the reaction vessel is preferably purged with nitrogen. The volume of the reaction vessel can be selected from 1 L to 100 m³ as appropriate. One example of the size of the reaction vessel is from 1 to 10 L, another example is from 10 L to 1000 L, and still another example is from 1 m³ to 100 m³.

Stirring in the polycondensation reaction is preferably carried out using a stirring blade. The stirring blade is preferably a double helical ribbon blade.

Further, in the method for producing the present embodiment, the polycondensation reaction is preferably allowed to proceed with a sealing liquid disposed between the shaft of the stirring blade and the top plate of the reaction vessel to form a seal. By adopting a mechanical seal using such a sealing liquid, even if a high pressure is applied to the polycondensation reaction system, the reaction system is sealed, and leakage of diamine/dicarboxylic acid, polycondensates being synthesized, and the like can be prevented. This allows for a more precise design of the composition of polyamide resin and the production of a polyamide resin having better quality.

The type of the sealing liquid is not limited, but the sealing liquid preferably contains oil and/or water, and more preferably contains at least oil. When a mechanical seal is adopted, a single mechanical seal or a double mechanical seal may be employed, but a double mechanical seal is preferred.

In the method for producing the present embodiment, the diamine and the dicarboxylic acid are polycondensed in the presence of water to make a primary polycondensate. For example, water is added to the reaction vessel along with the diamine and the dicarboxylic acid. Furthermore, a catalyst (preferably a phosphorus-based catalyst), an antioxidant, a terminal capping agent, and the like may also be added together as necessary.

The amount of water added to the polycondensation reaction system is preferably 28 mass% or more, more preferably 30 mass% or more, even more preferably 32 mass% or more, and further preferably 33 mass% or more, with respect to the total amount of substances present in the polycondensation reaction system. Setting the amount of water added to the polycondensation reaction system to equal to or more than the lower limit described above tends to improve the fluidity of the reaction system, and thereby facilitating the uniform early-stage polycondensation. Further, the amount of water is preferably 80 mass% or less, more preferably 70 mass% or less, even more preferably 60 mass% or less, further preferably 50 mass% or less, and further more preferably 40 mass% or less, with respect to the total amount of substances present in the polycondensation reaction system. Setting the amount of water added to the polycondensation reaction system to equal to or less than the upper limit described above tends to improve heating efficiency, and reduce the amount of water distilled off in the next step, and thereby improving productivity. The phrase "total amount of substances present in the polymerization reaction system" means the total amount of all substances (water, diamine, dicarboxylic acid, additives, and the like) present in the polymerization reaction system. One example is the total amount of water, diamine, dicarboxylic acid, and additives placed into the reaction vessel.

The reaction temperature of the early-stage polycondensation step in the method for producing the present embodiment (the maximum attainable temperature in the reaction vessel in the early-stage polycondensation step) is preferably 100°C or higher, more preferably 115°C or higher, even more preferably 130°C or higher, further preferably 145°C or higher, and further more preferably 155°C or higher. Setting the reaction temperature of the early-stage polycondensation step to equal to or higher than the lower limit described above tends to promote the formation of nylon salt (a salt of diamine and dicarboxylic acid) and produce a high-quality primary polycondensate in the late-stage polycondensation later on. Further, the reaction temperature in the early-stage polycondensation step is preferably 220°C or lower, more preferably 190°C or lower, even more preferably 180°C or lower, and further preferably 170°C or lower. Setting the reaction temperature in the early-stage polycondensation step to equal to or less than the upper limit described above tends to suppress the deterioration of diamine during the reaction, and the molecular weight distribution of the polycondensate tends to be narrow.

In the method for producing the present embodiment, the temperature of the polycondensation reaction system is preferably gradually increased until the temperature reaches the maximum attainable temperature in the early-stage polycondensation step, and is usually preferably increased over a period of from 3 to 120 minutes. The rate of temperature increase of the polycondensation reaction system in the early-stage polycondensation step is preferably 2°C/min or more and 20°C/min or less.

In the method for producing the present embodiment, the reaction time in the early-stage polycondensation step (the reaction time after reaching the maximum attainable temperature) is preferably 30 minutes or more and 120 minutes or less.

In the early-stage polycondensation step, the polycondensation reaction is preferably carried out with pressure applied. The pressure is preferably 0.3 MPa or more, more preferably 0.4 MPa or more, even more preferably 0.5 MPa or more, and further preferably 0.55 MPa or more. Setting the pressure to equal to or more than the lower limit described above suppresses the volatilization of the raw material monomer, making it easy to produce a resin composition having a target molecular weight. Further, the pressure is preferably 2.5 MPa or less, more preferably 1.5 MPa or less, even more preferably 1.1 MPa or less, further preferably 0.8 MPa or less, and yet further more preferably 0.65 MPa or less. Setting the pressure to equal to or less than the upper limit described above can lower the reaction temperature and tends to improve productivity.

In the method for producing the present embodiment, it is preferable to remove a portion of the water from the polycondensation reaction system and allow the polycondensation to proceed further. By including the water removal step, the progress of the polycondensation reaction is promoted, and the resulting primary polycondensate tends to have a higher molecular weight. However, when the polycondensation reaction sufficiently proceeds without the water removal step, it is not necessary to have the water removal step. When the water removal step is not implemented, the polycondensation reaction step is preferably carried out with the reaction temperature, reaction time, and reaction pressure being the same as the conditions of the early-stage polycondensation step.

In the water removal step, water is preferably gradually removed. For example, 10 mass% of the total amount of water in the reaction system is preferably removed over a period of 1 to 5 hours.

The amount of water present in the polycondensation reaction system in the water removal step is preferably 14 mass% or more and 40 mass% or less with respect to the total amount of substances present in the polycondensation reaction system. The amount of water present in the polycondensation reaction system after the water removal is more preferably 16 mass% or more, and even more preferably 18 mass% or more, with respect to the total amount of substances present in the polycondensation reaction system. Setting the amount of water present in the polycondensation reaction system after the water removal to equal to or more than the lower limit described above tends to reduce the stirring torque during the reaction and allow the reaction to proceed uniformly. Note that, when the amount of water present in the polycondensation reaction system is 10 mass% or less with respect to the total amount of substances present in the polycondensation reaction system, the reaction product tends to solidify in the reaction vessel, making stirring difficult. Further, the amount of water present in the polycondensation reaction system after the water removal is more preferably 33 mass% or less, even more preferably 30 mass% or less, and further preferably 27 mass% or less, with respect to the total amount of substances present in the polycondensation reaction system. Setting the amount of water present in the polycondensation reaction system after the water removal to equal to or less than the upper limit described above tends to promote the polycondensation reaction and produce a primary polycondensate having a higher molecular weight.

The water used herein includes not only water initially added to the polycondensation reaction system but also condensed water produced by polycondensation.

In the water removing step, water may be removed at once to reach the amount of water described above, or water may be gradually removed during the water removing step to maintain the amount of water described above.

The reaction temperature in the water removal step is preferably 140°C or higher, more preferably 155°C or higher, even more preferably 170°C or higher, further preferably 175°C or higher, and further more preferably 195°C or higher. Setting the reaction temperature in the water removal step equal to or higher than the lower limit described above tends to promote the distillation of water and the polycondensation of early-stage polycondensate. Further, the reaction temperature in the water removal step is preferably 240°C or lower, more preferably 215°C or lower, even more preferably 210°C or lower, and further preferably 205°C or lower. Setting the reaction temperature in the water removal step to equal to or less than the upper limit described above tends to suppress deterioration of early-stage polycondensate during the water removal step.

In the method for producing the present embodiment, the temperature is preferably gradually increased until the temperature reaches the reaction temperature of the water removal step described above, and is usually preferably increased over a period of from 3 to 120 minutes. The rate of temperature increase of the polycondensation reaction system in the water removal step is preferably 1°C/min or more and 10°C/min or less.

In the method for producing the present embodiment, the reaction time in the water removal step (the reaction time after reaching the maximum attainable temperature) is preferably 30 minutes or more, and preferably 10 hours or less, more preferably 7 hours or less.

In the water removal step, the polycondensation reaction is preferably carried out with pressure applied. The pressure is preferably 0.5 MPa or more, more preferably 0.8 MPa or more, even more preferably 1.2 MPa or more, and further preferably 1.5 MPa or more. Setting the pressure to equal to or more than the lower limit described above tends to suppress the distillation of unreacted monomers together with water, making deviation of the molar ratio between diamine and dicarboxylic acid less likely. Further, the pressure is preferably 2.5 MPa or less, more preferably 2.3 MPa or less, and even more preferably 2.1 MPa or less. Setting the pressure to equal to or less than the upper limit described above tends to suppress deterioration of early-stage polycondensate during the water removal step.

The ratio of the stirring torque of the reaction vessel in the water removal step to the stirring torque of the reaction vessel in the early-stage polycondensation step (water removal step/polycondensation step) is preferably more than 1, and more preferably 1.1 or more. Setting the ratio to equal to or more than the lower limit described above tends to result in an early-stage polycondensate having a higher molecular weight, making it easy to increase the molecular weight in the late-stage polycondensation step. Moreover, regarding the upper limit, 20 times or less is practical, and 10 times or less is preferable. Setting the ratio to equal to or less than the upper limit described above tends to maintain the fluidity of the reaction system and allow the reaction to proceed uniformly.

In the present embodiment, the polycondensation reaction is preferably allowed to proceed further after the water removal step. The inclusion of such a late-stage polycondensation step makes it easy to produce a primary polycondensate having a desired molecular weight.

The reaction temperature in the late-stage polycondensation step is preferably 140°C or higher, more preferably 155°C or higher, even more preferably 170°C or higher, further preferably 195°C or higher, and further more preferably 205°C or higher. Setting the reaction temperature in the late-stage polycondensation step to equal to or higher than the lower limit described above tends to promote the polycondensation reaction and produce a primary polycondensate having a higher molecular weight. Further, the reaction temperature in the late-stage polycondensation step is preferably 265°C or lower, more preferably 255°C or lower, even more preferably 245°C or lower, and further preferably 240°C or lower. Setting the reaction temperature in the late-stage polycondensation step to equal to or less than the upper limit described above tends to suppress deterioration of the primary polycondensate during the reaction.

In the method for producing the present embodiment, the temperature is preferably gradually increased until the temperature reaches the reaction temperature of the late-stage polycondensation step described above, and is usually preferably increased over a period of from 3 to 120 minutes. The rate of temperature increase of the polycondensation reaction system in the late-stage polycondensation step is preferably 1°C/min or more and 10°C/min or less.

The reaction time in the late-stage polycondensation step (the reaction time after reaching the maximum attainable temperature) is preferably 30 minutes or more, and preferably 10 hours or less, more preferably 7 hours or less.

In the late-stage polycondensation step, the polycondensation reaction is preferably carried out with pressure applied. The pressure is preferably 0.5 MPa or more, more preferably 0.8 MPa or more, even more preferably 1.2 MPa or more, further preferably 1.5 MPa or more, and further more preferably 1.8 MPa or more. Setting the pressure to equal to or more than the lower limit described above suppresses the volatilization of unreacted monomers and low molecular weight components, making it easy to produce a polyamide resin having a target molecular weight. Further, the pressure is preferably 3.5 MPa or less, more preferably 3.3 MPa or less, and even more preferably 3.1 MPa or less. Setting the pressure to equal to or less than the upper limit described above tends to suppress deterioration of polycondensate during the late-stage polycondensation step.

The amount of water present in the polycondensation reaction system in the late-stage polycondensation step (for example, the percentage of water in the total amount of substances present in the reaction vessel) is preferably 14 mass% or more, more preferably 16 mass% or more, and even more preferably 18 mass% or more, with respect to the total amount of substances present in the polycondensation reaction system. Setting the amount of water present in the polycondensation reaction system in the late-stage polycondensation step to equal to or more than the lower limit described above tends to reduce the stirring torque and allow the reaction to proceed uniformly. Note that, when the amount of water present in the polycondensation reaction system is 10 mass% or less with respect to the total amount of substances present in the polycondensation reaction system, the reaction product may solidify in the reaction vessel, making stirring difficult. Further, the amount of water present in the polycondensation reaction system in the late-stage polycondensation step is preferably 40 mass% or less, more preferably 33 mass% or less, even more preferably 30 mass% or less, and further preferably 27 mass% or less, with respect to the total amount of substances present in the polycondensation reaction system. Setting the amount of water present in the polycondensation reaction system in the late-stage polycondensation step to equal to or less than the upper limit described above tends to promote the polycondensation reaction and produce a primary polycondensate having a higher molecular weight.

The water used herein includes not only water initially added to the polycondensation reaction system but also condensed water produced by polycondensation.

The method for producing the present embodiment includes increasing the degree of polymerization of the primary polycondensate.

In the method for producing the present embodiment, when increasing the degree of polymerization of the primary polycondensate, it is preferable to remove the primary polycondensate from the reaction vessel and increase the molecular weight thereof. For the removal, for example, a nozzle may be provided at a lower portion of the reaction vessel, and the primary polycondensate may be taken out via the nozzle into a container at normal pressure. In addition, in the present embodiment, the primary polycondensate is preferably taken out from the reaction vessel and then dried to make a powdered primary polycondensate.

The amount of water in the reaction vessel at the time of removal is preferably 20 mass% or more and 30 mass% or less with respect to the total amount of substances present in the polycondensation reaction system. The removal rate from the reaction vessel is preferably 100 g/min or more and 500 g/min or less. From the viewpoint of further reducing the oxidative degradation of the primary polycondensate, the primary polycondensate is preferably removed in a nitrogen atmosphere under atmospheric pressure.

The number average molecular weight of the primary polycondensate is preferably 500 or more, more preferably 800 or more, and may be 2000 or more. Setting the number average molecular weight of the primary polycondensate to equal to or higher than the lower limit described above makes it easy to increase the degree of polymerization later on and tends to result in a polyamide resin having a higher molecular weight. Further, the number average molecular weight of the primary polycondensate is preferably 10000 or less, more preferably 7000 or less, even more preferably 5000 or less, further preferably 4000 or less, and further more preferably 3600 or less. Setting the number average molecular weight of the primary polycondensate to equal to or less than the upper limit described above improves the fluidity of the primary polycondensate and tends to stabilize discharge during removal.

Moreover, the weight average molecular weight (Mw) of the primary polycondensate is preferably 1000 or more, more preferably 3000 or more, and even more preferably 4000 or more. Setting the weight average molecular weight (Mw) of the primary polycondensate to equal to or higher than the lower limit described above makes it easy to increase the degree of polymerization later on and tends to result in a polyamide resin having a higher molecular weight. Further, the weight average molecular weight (Mw) of the primary polycondensate is preferably 20000 or less, more preferably 16000 or less, and even more preferably 13000 or less. Setting the weight average molecular weight (Mw) of the primary polycondensate to equal to or less than the upper limit described above improves the fluidity of the primary polycondensate and tends to stabilize discharge during removal.

Furthermore, the degree of dispersion (Mw/Mn) of the primary polycondensate is preferably 5.00 or less, more preferably 4.50 or less, even more preferably 4.20 or less, and further preferably 3.50 or less. Setting the degree of dispersion (Mw/Mn) of the primary polycondensate to equal to or less than the upper limit described above reduces the degree of dispersion of the polyamide resin resulting from increasing the degree of polymerization later on, and tends to improve the mechanical strength after molding. In addition, the degree of dispersion (Mw/Mn) of the primary polycondensate may be 1.2 or more, or 2.0 or more. Setting the degree of dispersion (Mw/Mn) of the primary polycondensate to equal to or more than the lower limit described above increases the fluidity of the polyamide resin resulting from increasing the degree of polymerization later on, and tends to improve moldability.

The ratio of terminal amino group concentration to terminal carboxyl group concentration in the primary polycondensate (amino group concentration/carboxyl group concentration) is preferably from 0.9 to 1.1. Setting the ratio in such a range tends to allow the effect of the present invention to be more effectively exhibited.

The method for producing a polyamide resin according to the present embodiment includes increasing the degree of polymerization of the primary polycondensate of the diamine and the dicarboxylic acid. The number average molecular weight of the polyamide resin is preferably increased to 2 times or more and preferably 10 times or less as a result of increasing the degree of polymerization.

A known method can be employed as a means for increasing the degree of polymerization, and examples thereof include solid phase polymerization and degassing extrusion, of which solid phase polymerization is preferable.

When performing solid phase polymerization, heating is preferably performed at 200°C or higher, more preferably at 230°C or higher, and preferably performed at 310°C or lower, more preferably at 280°C or lower. The heating time during the solid phase polymerization is preferably from 30 minutes to 20 hours, and more preferably from 1 to 3 hours. Specific examples of solid phase polymerization apparatus include a rotary dryer, a vibration dryer, and a conduction heating dryer (for example, TorusDisc available from Hosokawa Micron Corporation, and Solidaire available from Hosokawa Micron Corporation).

The number average molecular weight of the polyamide resin resulting from the method for producing the present embodiment is preferably 1000 or more, more preferably 3000 or more, even more preferably 5000 or more, and further preferably 6000 or more. Further, the number average molecular weight of the polyamide resin is preferably 30000 or less, more preferably 20000 or less, and even more preferably 13000 or less. Setting the number average molecular weight of the polyamide resin to equal to or less than the upper limit improves fluidity during molding and tends to improve moldability.

Further, the weight average molecular weight (Mw) of the polyamide resin resulting from the method for producing the present embodiment is preferably 3000 or more, more preferably 8000 or more, even more preferably 10000 or more, further preferably 20000 or more, and further more preferably 30000 or more. Setting the weight average molecular weight (Mw) of the polyamide resin to equal to or more than the lower limit described above tends to improve the mechanical strength after molding. Further, the weight average molecular weight (Mw) of the polyamide resin is preferably 100000 or less, more preferably 80000 or less, even more preferably 60000 or less, further preferably 50000 or less, and further more preferably 45000 or less. Setting the weight average molecular weight (Mw) of the polyamide resin to equal to or less than the upper limit described above improves fluidity during molding and tends to improve moldability.

Furthermore, the degree of dispersion (Mw/Mn) of the polyamide resin resulting from the method for producing the present embodiment is preferably 10.00 or less, more preferably 6.00 or less, even more preferably 5.50 or less, and may be 5.00 or less. Setting the degree of dispersion (Mw/Mn) of the polyamide resin to equal to or less than the upper limit described above tends to improve the mechanical strength after molding. Further, the degree of dispersion (Mw/Mn) of the polyamide resin may be 1.20 or more, or 2.00 or more. Setting the degree of dispersion (Mw/Mn) of the polyamide resin to equal to or more than the lower limit described above improves fluidity during molding and tends to improve moldability.

Next, the polyamide resin resulting from the method for producing the present embodiment will be explained.

In the present embodiment, the polyamide resin resulting from the present embodiment includes diamine-derived structural units and dicarboxylic acid-derived structural units, with more than 30 mol% of the diamine-derived structural units being structural units represented by Formula (1) and 20 mol% or more of the dicarboxylic acid-derived structural units being structural units derived from an aromatic dicarboxylic acid. 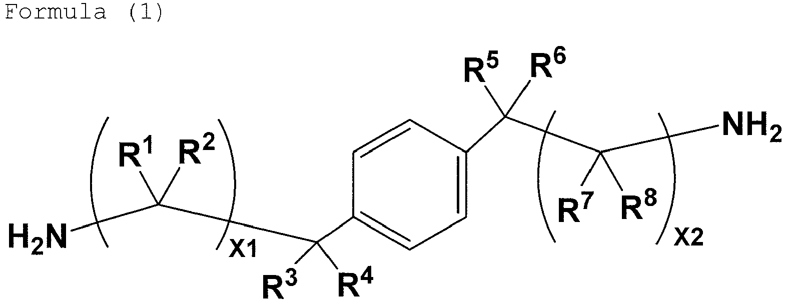 where in Formula (1), R¹ to R⁸ each independently represent a hydrogen atom or an aliphatic group having from 1 to 5 carbons; X1 and X2 are each independently 1 or 2.

The first embodiment of the polyamide resin resulting from the present embodiment is a polyamide resin including diamine-derived structural units and dicarboxylic acid-derived structural units, with 50 mol% or more of the diamine-derived structural units being structural units derived from p-benzenediethanamine and 65 mol% or more of the dicarboxylic acid-derived structural units being structural units derived from an aromatic dicarboxylic acid.

In the polyamide resin of the first embodiment, the percentage of structural units derived from p-benzenediethanamine in the diamine-derived structural units is 50 mol% or more, preferably 60 mol% or more, more preferably 70 mol% or more, even more preferably 80 mol% or more, further preferably 90 mol% or more, and further more preferably 94 mol% or more, and may be 96 mol% or more, 98 mol% or more, or 99 mol% or more. By setting the foregoing percentage to be more than or equal to the lower limit described above, the cooling crystallization enthalpy change (ΔH) can be increased, and the moldability tends to improve. The upper limit of the percentage of the structural units derived from p-benzenediethanamine among the diamine-derived structural units is 100 mol%.

The polyamide resin of the first embodiment may include, as diamine-derived structural units, other diamine-derived structural units in addition to the structural units derived from p-benzenediethanamine. Examples of such other structural units include ones derived from m-benzenediethanamine, o-benzenediethanamine, aliphatic diamines, alicyclic diamines and other aromatic diamines besides benzenediethanamine, and m-benzenediethanamine is preferable.

The polyamide resin of the first embodiment may contain only one type of other diamine-derived structural units or may contain two or more types of other diamine-derived structural units.

When the polyamide resin of the first embodiment includes, as diamine-derived structural units, structural units derived from m-benzenediethanamine, preferably, the content of the structural units derived from p-benzenediethanamine is from 70 to 99 mol% (preferably 80 mol% or more, more preferably 90 mol% or more, and even more preferably 93 mol% or more), and the content of the structural units derived from m-benzenediethanamine is from 1 to 30 mol% (preferably 20 mol% or less, more preferably 10 mol% or less, and even more preferably 7 mol% or less).

A well-known aliphatic diamine can be widely adopted as the aliphatic diamine, and the aliphatic diamine is preferably an aliphatic diamine having from 6 to 12 carbons. Examples thereof include linear aliphatic diamines, such as 1,6-hexanediamine, 1,7-heptanediamine, 1,8-octanediamine, 1,9-nonanediamine, 1,10-decanediamine, 1,11-undecanediamine, and 1,12-dodecanediamine; and branched aliphatic diamines, such as 2-methyl-1,8-octanediamine, 4-methyl-1,8-octanediamine, 5-methyl-1,9-nonanediamine, 2,2,4-/2,4,4-trimethylhexamethylenediamine, 2-methyl-1,5-pentanediamine, 2-methyl-1,6-hexanediamine, and 2-methyl-1,7-heptanediamine.

A well-known alicyclic diamine can be widely adopted as the alicyclic diamine, and examples include 1,2-bis(aminomethyl) cyclohexane, 1,3-bis(aminomethyl) cyclohexane, 1,4-bis(aminomethyl) cyclohexane, isophoronediamine, 4,4'-thiobis(cyclohexan-1-amine), and 4,4'-thiobis(cyclohexan-1-amine).

Additionally, for details on other aromatic diamines, reference can be made to the disclosure of paragraph [0052] of WO 2017/126409, the contents of which are incorporated herein by reference.

In the polyamide resin of the first embodiment, the percentage of structural units derived from an aromatic dicarboxylic acid in the dicarboxylic acid-derived structural units is 65 mol% or more. Setting the foregoing percentage to equal to or more than the lower limit described above tends to result in a polyamide resin with a higher melting point and a higher glass transition temperature.

In the polyamide resin of the first embodiment, the percentage of the structural units derived from an aromatic dicarboxylic acid in the dicarboxylic acid-derived structural units is 65 mol% or more, preferably 70 mol% or more, more preferably 75 mol% or more, even more preferably 80 mol% or more, further preferably 90 mol% or more, and further more preferably 94 mol% or more, and depending on the application, may be 96 mol% or more, 98 mol% or more, or 99 mol% or more. The upper limit may be 100 mol%, and depending on the application, may be 97 mol% or less.

The polyamide resin of the first embodiment may include only one type of structural units derived from an aromatic dicarboxylic acid, or may include two or more types of structural units derived from an aromatic dicarboxylic acid. When two or more kinds are contained, the total amount thereof is preferably in the above range.

A preferable example of the aromatic dicarboxylic acid in the first embodiment is phenylene dicarboxylic acid.

Another preferred example of the aromatic dicarboxylic acid in the first embodiment is an aromatic dicarboxylic acid represented by Formula (FC).

Formula (FC) HOOC-(CH₂)ₘ-aromatic ring structure-(CH₂)ₘ-COOH

where in Formula (FC), m represents 0, 1, or 2.

In Formula (FC), m is preferably 0 or 1 and is more preferably 0.

In Formula (FC), the aromatic ring structure is a structure including an aromatic ring, is preferably a structure including an aromatic ring only, or a structure including an aromatic ring and a substituent thereof only, and is more preferably a structure including an aromatic ring only. Examples of substituents that may be present on the aromatic ring include alkyl groups having from 1 to 3 carbons or halogen atoms. The aromatic ring is preferably not substituted with a halogen atom.

The aromatic ring structure may be either a single ring or a condensed ring, and a single ring is preferred. Furthermore, the number of carbons constituting the aromatic ring is not particularly specified, but a 4 to 15 membered ring is preferable.

More specifically, the aromatic ring structure is preferably a benzene ring, a naphthalene ring, or a benzene ring or naphthalene ring having a substituent thereon, and is more preferably a benzene ring or a benzene ring having a substituent thereon.

More specific examples of the aromatic dicarboxylic acid in the first embodiment include isophthalic acid, terephthalic acid, orthophthalic acid, a phenylenediacetic acid (o-phenylenediacetic acid, p-phenylenediacetic acid, and m-phenylenediacetic acid), and naphthalenedicarboxylic acids (1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid).

Among these, the aromatic dicarboxylic acid is preferably selected from isophthalic acid, terephthalic acid, and a phenylenediacetic acid, is more preferably isophthalic acid or a phenylenediacetic acid, and is even more preferably isophthalic acid. In particular, preferably 90 mol% or more, more preferably 95 mol% or more, even more preferably 98 mol% or more, and yet even more preferably 99 mol% or more of the aromatic dicarboxylic acids are the abovementioned aromatic dicarboxylic acids.

In particular, the cooling crystallization enthalpy change (ΔH) can be increased and the moldability can be improved by using isophthalic acid. Furthermore, such a constitution can reduce the mass loss rate.

Meanwhile, if a phenylenediacetic acid is used in the polyamide resin of the first embodiment, the polyamide resin preferably includes from 50 to 100 mol% of p-phenylenediacetic acid and from 50 to 0 mol% of m-phenylenediacetic acid.

Next, a preferred embodiment of the dicarboxylic acid-derived structural units in the polyamide resin of the first embodiment will be described.

A preferred form A of the dicarboxylic acid-derived structural units in the first embodiment is a form in which more than 95 mol% of the dicarboxylic acid-derived structural units are structural units derived from an aromatic dicarboxylic acid. When more than 95 mol% of the dicarboxylic acid-derived structural units are derived from an aromatic dicarboxylic acid, the mass loss rate can be reduced while maintaining a high melting point and a high glass transition temperature. Moreover, the cooling crystallization enthalpy change (ΔH) can be increased, and the moldability tends to improve. In addition, the amount of outgassing can be reduced.

In the preferred form A of the dicarboxylic acid-derived structural units in the first embodiment, the percentage of structural units derived from an aromatic dicarboxylic acid in the dicarboxylic acid-derived structural units is preferably 96 mol% or more, more preferably 97 mol% or more, even more preferably 98 mol% or more, and further preferably 99 mol% or more. By setting the foregoing percentage to be more than or equal to the lower limit described above, the cooling crystallization enthalpy change (ΔH) can be increased, and the moldability tends to further improve. Furthermore, the upper limit of the percentage of structural units derived from aromatic dicarboxylic acids among the dicarboxylic acid-derived structural units may be 100 mol%.

In the preferred form A of the dicarboxylic acid-derived structural units in the first embodiment, the aromatic dicarboxylic acid is preferably an aromatic dicarboxylic acid represented by Formula (FC) described above, more preferably selected from isophthalic acid, terephthalic acid, and a phenylenediacetic acid, even more preferably isophthalic acid and/or a phenylenediacetic acid, and further preferably isophthalic acid. In particular, preferably 90 mol% or more, more preferably 95 mol% or more, even more preferably 98 mol% or more, and yet even more preferably 99 mol% or more of the structural units derived from an aromatic dicarboxylic acid are structural units derived from the aromatic dicarboxylic acid described above.

In particular, the cooling crystallization enthalpy change (ΔH) can be increased and the moldability can be improved by using isophthalic acid. Furthermore, such a constitution can reduce the mass loss rate.

In a case where a phenylenediacetic acid is used in the preferred form A of the dicarboxylic acid-derived structural units in the first embodiment, the aromatic dicarboxylic acid preferably includes from 50 to 100 mol% of p-phenylenediacetic acid and from 50 to 0 mol% of m-phenylenediacetic acid. The total of the p-phenylenediacetic acid and the m-phenylenediacetic acid is 100 mol% or less and preferably from 97 to 100 mol%, of all dicarboxylic acid-derived structural units.

In the polyamide resin of the first embodiment, a preferred form B of the dicarboxylic acid-derived structural units is a form in which from 65 to 97 mol% of the dicarboxylic acid-derived structural units are structural units derived from an aromatic dicarboxylic acid and from 3 to 35 mol% of the dicarboxylic acid-derived structural units are structural units derived from an alicyclic dicarboxylic acid. The total of the structural units derived from an aromatic dicarboxylic acid and the structural units derived from an alicyclic dicarboxylic acid is 100 mol% or less, and preferably from 97 to 100 mol%, of all dicarboxylic acid-derived structural units.

In the preferred form B of the dicarboxylic acid-derived structural units in the first embodiment, the dicarboxylic acid-derived structural units are composed of an aromatic dicarboxylic acid and an alicyclic dicarboxylic acid. Through such a constitution, the mass loss rate can be reduced while maintaining a high melting point and a high glass transition temperature. Moreover, the cooling crystallization enthalpy change (ΔH) can be increased, and the moldability tends to improve. In addition, the amount of outgassing can be reduced.

In the preferred form B of the dicarboxylic acid-derived structural units in the first embodiment, the percentage of the aromatic dicarboxylic acid in the dicarboxylic acid-derived structural units is 65 mol% or more, preferably 70 mol% or more, more preferably 75 mol% or more, even more preferably 80 mol% or more, further preferably 85 mol% or more, and further more preferably 88 mol% or more. Setting the foregoing percentage to equal to or more than the lower limit described above tends to result in a polyamide resin with a higher melting point and a higher glass transition temperature. Furthermore, the percentage of the aromatic dicarboxylic acids in the dicarboxylic acid-derived structural units is 97 mol% or less, and preferably 96 mol% or less, and may be 94 mol% or less or 92 mol% or less. When the foregoing percentage is set to equal to or less than the upper limit described above, the mass loss rate can be reduced, and the thermal stability during molding tends to further improve.

In the preferred form B of the dicarboxylic acid-derived structural units in the first embodiment, the percentage of the alicyclic dicarboxylic acid in the dicarboxylic acid-derived structural units is 3 mol% or more, and preferably 4 mol% or more, and may be 6 mol% or more or 8 mol% or more. When the foregoing percentage is set to equal to or more than the lower limit described above, the mass loss rate can be further reduced, and the thermal stability during molding tends to further improve. In addition, the percentage of the alicyclic dicarboxylic acids in the dicarboxylic acid-derived structural units is 35 mol% or less, preferably 30 mol% or less, more preferably 25 mol% or less, even more preferably 20 mol% or less, still even more preferably 15 mol% or less, and yet even more preferably 12 mol% or less. When the foregoing percentage is set to equal to or less than the upper limit described above, the cooling crystallization enthalpy change (ΔH) can be further increased, and moldability can be further improved. In particular, by setting the percentage of the structural units derived from an alicyclic dicarboxylic acid out of the dicarboxylic acid-derived structural units to a range from 8 to 12 mol%, a high melting point, a high glass transition temperature, a high ΔH, a low mass loss rate, and low outgassing can be achieved in a well-balanced manner.

In the preferred form B of the dicarboxylic acid-derived structural units in the first embodiment, the aromatic dicarboxylic acid is preferably an aromatic dicarboxylic acid represented by Formula (FC) described above, more preferably selected from isophthalic acid, terephthalic acid, and a phenylenediacetic acid, even more preferably isophthalic acid and a phenylenediacetic acid, and further preferably isophthalic acid. In particular, preferably 90 mol% or more, more preferably 95 mol% or more, even more preferably 98 mol% or more, and yet even more preferably 99 mol% or more of the aromatic dicarboxylic acids are the abovementioned aromatic dicarboxylic acids. Furthermore, the upper limit is 100 mol%.

In the preferred form B of the dicarboxylic acid-derived structural units in the first embodiment, the alicyclic dicarboxylic acid is not specified, and a known alicyclic dicarboxylic acid can be used. Specific examples include alicyclic dicarboxylic acids having from 6 to 20 carbons. The alicyclic dicarboxylic acid is preferably an alicyclic dicarboxylic acid represented by the Formula (FA), and is more preferably a cyclohexane dicarboxylic acid (preferably a mixture of a cyclohexane dicarboxylic acid of a trans isomer and a cyclohexane dicarboxylic acid of a cis isomer). In particular, preferably 90 mol% or more, more preferably 95 mol% or more, even more preferably 98 mol% or more, and yet even more preferably 99 mol% or more of the alicyclic dicarboxylic acids are the abovementioned alicyclic dicarboxylic acids. Furthermore, the upper limit is 100 mol%.

Formula (FA) HOOC-(CH₂)ₙ-alicyclicstructure-(CH₂)ₙ-COOH

where in Formula (FA), n is 0, 1 or 2.

Here, n is preferably 0 or 1, and is more preferably 0.

The alicyclic structure is a structure including an alicyclic ring, is preferably a structure including an alicyclic ring only or a structure including an alicyclic ring and a substituent thereof only, and is more preferably a structure including an alicyclic ring only. Examples of substituents that may be present in the alicyclic structure include alkyl groups having from 1 to 3 carbons or halogen atoms. The alicyclic structure preferably does not have a halogen atom as a substituent.

The alicyclic structure may be either a single ring or a condensed ring, and a single ring is preferred. Also, the number of carbons constituting the ring is not particularly specified, but a 4 to 10 membered ring is preferable.

In the preferred form B of the dicarboxylic acid-derived structural units, the alicyclic structure is preferably a cyclohexane ring.

In the preferred form B of the dicarboxylic acid-derived structural units in the first embodiment, the cyclohexane dicarboxylic acid may be a cis isomer or a trans isomer, and is preferably a mixture of cis and trans isomers of cyclohexane dicarboxylic acid. By using such a mixture, a polyamide resin having a higher glass transition temperature can be obtained, and the mass loss rate can be further reduced.

The cyclohexane dicarboxylic acid is more preferably 1,4-cyclohexane dicarboxylic acid and/or 1,3-cyclohexane dicarboxylic acid, and even more preferably 1,4-cyclohexane dicarboxylic acid. The mass loss rate can be further reduced, and thermal stability during molding can be further improved by using such a compound.

In addition to the description above, specific examples of alicyclic dicarboxylic acids that can be used in the preferred form B of the dicarboxylic acid-derived structural units include 4,4'-methylenebis(2-methylcyclohexane-1-carboxylic acid), 4,4'-methylenebis(cyclohexane-1-carboxylic acid), 4,4'-oxobis(cyclohexane-1-carboxylic acid), and 4,4'-thiobis(cyclohexane-1-carboxylic acid).

Any of the preferred form A and the preferred form B of the dicarboxylic acid-derived structural units in the polyamide resin of the first embodiment may include other dicarboxylic acid-derived structural units in addition to the dicarboxylic acid-derived structural units described above. When other dicarboxylic acids are included, the percentage thereof is preferably not more than 3 mol% and more preferably not more than 1 mol%, of all of the dicarboxylic acid-derived structural units.

The polyamide resin of the first embodiment may include only one type of other dicarboxylic acid-derived structural units, or may include two or more types of other dicarboxylic acid-derived structural units.

Examples of the dicarboxylic acid constituting the dicarboxylic acid-derived structural units that may be contained in the polyamide resin of the first embodiment include an aliphatic dicarboxylic acid. A known aliphatic dicarboxylic acid can be used as the aliphatic dicarboxylic acid, and examples include succinic acid, glutaric acid, adipic acid, pimelic acid, suberic acid, azelaic acid, sebacic acid, and dodecanedicarboxylic acid.

Meanwhile, the polyamide resin of the first embodiment can be configured to be substantially free of structural units derived from an aliphatic dicarboxylic acid. "Substantially free" means that the percentage of structural units derived from an aliphatic dicarboxylic acid among the dicarboxylic acid-derived structural units is 5 mol% or less, preferably 3 mol% or less, and more preferably 1 mol% or less.

In addition, in the polyamide resin of the first embodiment, more than 95 mol% (preferably 96 mol% or more, and more preferably 98 mol% or more, and 100 mol% or less) of the diamine-derived structural units and the dicarboxylic acid-derived structural units are preferably structural units having a cyclic structure. Through such a constitution, a polyamide resin having a high melting point and a higher glass transition temperature can be obtained. Furthermore, such a constitution can reduce the mass loss rate. Moreover, the cooling crystallization enthalpy change (ΔH) can be increased, and the moldability tends to improve. In addition, the amount of outgassing can be reduced. A structural unit having a cyclic structure means a structural unit that includes a cyclic structure such as an aromatic ring or an alicyclic ring, and the structural unit thereof preferably includes either an aromatic ring or an alicyclic ring.

Note that, although the polyamide resin of the first embodiment is composed of dicarboxylic acid-derived structural units and diamine-derived structural units, it may also include other structural units in addition to the dicarboxylic acid-derived structural units and the diamine-derived structural units, or other moieties such as terminal groups. Examples of other structural units include, but are not limited to, structural units derived from, for example, a lactam such as ε-caprolactam, valerolactam, laurolactam, and undecalactam, or from an aminocarboxylic acid such as 11-aminoundecanoic acid and 12-aminododecanoic acid. Furthermore, the polyamide resin of the first embodiment may contain trace amounts of components such as additives used in synthesis.

The polyamide resin of the first embodiment is preferably composed of 70 mass% or more, more preferably 80 mass% or more, even more preferably 90 mass% or more, further preferably 95 mass% or more, and further more preferably 98 mass% or more of dicarboxylic acid-derived structural units and diamine-derived structural units.

The second embodiment of the polyamide resin resulting from the present embodiment is a polyamide resin including diamine-derived structural units and dicarboxylic acid-derived structural units, with 50 mol% or more of the diamine-derived structural units being structural unit derived from p-benzenediethanamine, 20 mol% or more and less than 95 mol% of the dicarboxylic acid-derived structural units being structural units derived from an aromatic dicarboxylic acid, and more than 5 mol% and 80 mol% or less of the dicarboxylic acid-derived structural units being structural units derived from an α,ω-linear aliphatic dicarboxylic acid having from 4 to 15 carbons.

In the polyamide resin of the second embodiment, the percentage of structural units derived from p-benzenediethanamine in the diamine-derived structural units is 50 mol% or more. When the polyamide resin of the present embodiment contains the structural unit derived from p-benzenediethanamine at an amount of 50 mol% or more, moldability tends to improve. The percentage of structural units derived from p-benzenediethanamine out of the diamine-derived structural units is preferably 60 mol% or more, more preferably 70 mol% or more, even more preferably 80 mol% or more, yet even more preferably 90 mol% or more, and still even more preferably 94 mol% or more, and may be 96 mol% or more, 98 mol% or more, or 99 mol% or more. The upper limit of the percentage of the structural units derived from p-benzenediethanamine among the diamine-derived structural units is 100 mol%.

The polyamide resin of the second embodiment may include, as diamine-derived structural units, other diamine-derived structural units in addition to the structural units derived from p-benzenediethanamine. Examples of such other structural units include ones derived from m-benzenediethanamine, o-benzenediethanamine, aliphatic diamines, alicyclic diamines and other aromatic diamines besides benzenediethanamine, and m-benzenediethanamine is preferable.

The polyamide resin of the second embodiment may contain only one type of other diamine-derived structural units or may contain two or more types of other diamine-derived structural units.

In a case where the polyamide resin of the second embodiment includes, as diamine-derived structural units, structural units derived from m-benzenediethanamine, preferably, the content of the structural units derived from p-benzenediethanamine is from 70 to 99 mol% (preferably 80 mol% or more, more preferably 90 mol% or more, and even more preferably 93 mol% or more), and the content of the structural units derived from m-benzenediethanamine is from 1 to 30 mol% (preferably 20 mol% or less, more preferably 10 mol% or less, and even more preferably 7 mol% or less).

The aliphatic diamines, the alicyclic diamines, and the other aromatic diamines have the same definitions as the aliphatic diamines, the alicyclic diamines, and the other aromatic diamines described in the section about the polyamide resin of the first embodiment, and preferred ranges thereof are also the same.

In the polyamide resin of the second embodiment, the percentage of structural units derived from an aromatic dicarboxylic acid (preferably isophthalic acid) in the dicarboxylic acid-derived structural units is 20 mol% or more and less than 95 mol%. Setting the percentage to equal to or more than the lower limit described above results in a polyamide resin with a higher melting point and a higher glass transition temperature. In addition, the elastic modulus of the molded article tends to be further improved. On the other hand, when the percentage is set to equal to or less than the upper limit described above, the mass loss rate can be reduced, and the thermal stability during molding improves.

In the polyamide resin of the second embodiment, the percentage of structural units derived from an aromatic dicarboxylic acid in the dicarboxylic acid-derived structural units is 20 mol% or more, preferably 30 mol% or more, more preferably 40 mol% or more, and even more preferably 45 mol% or more, and depending on the application, may be 55 mol% or more, 60 mol% or more, or 65 mol% or more. The upper limit is less than 95 mol%, preferably 94 mol% or less, more preferably 93 mol% or less, even more preferably 92 mol% or less, further preferably 91 mol% or less, further more preferably 90 mol% or less, and yet further more preferably 88 mol% or less.

The polyamide resin according to the second embodiment may include only one type of structural units derived from an aromatic dicarboxylic acid, or may include two or more types of structural units derived from an aromatic dicarboxylic acid. When two or more kinds are contained, the total amount thereof is preferably in the above range.

The details of the aromatic dicarboxylic acid in the second embodiment are the same as those described in the section about aromatic dicarboxylic acid in the first embodiment, and the preferred ranges are also the same.

In the polyamide resin of the second embodiment, the percentage of the structural units derived from an α,ω-linear aliphatic dicarboxylic acid having from 4 to 15 carbons in the dicarboxylic acid-derived structural units is more than 5 mol% and 80 mol% or less. When the percentage is set to the lower limit described above or more, the mass loss rate during heating can be reduced, and the thermal stability during molding further improves, and when the percentage is set to the upper limit described above or lower, the elastic modulus of the molded article further improves.

In the polyamide resin of the second embodiment, the percentage of the structural units derived from an α,ω-linear aliphatic dicarboxylic acid having from 4 to 15 carbons (preferably sebacic acid) in the dicarboxylic acid-derived structural units is more than 5 mol%, preferably 6 mol% or more, more preferably 7 mol% or more, even more preferably 8 mol% or more, further preferably 9 mol% or more, further more preferably 10 mol% or more, and yet further more preferably 12 mol% or more. The upper limit is 80 mol% or less, preferably 70 mol% or less, more preferably 60 mol% or less, and even more preferably 55 mol% or less, and depending on the application, may be 45 mol% or less, 40 mol% or less, or 35 mol% or less. By setting the percentage to the upper limit described above or lower, the elastic modulus of the molded article tend to be further improved. Moreover, when the percentage is set to equal to or more than the lower limit described above, the mass loss rate during heating can be further reduced, and the thermal stability during molding tends to further improve.

The polyamide resin of the second embodiment may include only one type of structural units derived from an α,ω-linear aliphatic dicarboxylic acid having from 4 to 15 carbons, or may include two or more types of such structural units. When two or more kinds are contained, the total amount thereof is preferably in the above range.

Preferred examples of the α,ω-linear aliphatic dicarboxylic acid having from 4 to 15 carbons in the second embodiment include succinic acid, glutaric acid, adipic acid, pimelic acid, suberic acid, azelaic acid, sebacic acid, and dodecanedioic acid. Among these, adipic acid and sebacic acid are preferable, and sebacic acid is more preferable.

In particular, preferably 90 mol% or more, more preferably 95 mol% or more, even more preferably 98 mol% or more, and yet even more preferably 99 mol% or more of the α,ω-linear aliphatic dicarboxylic acid having from 4 to 15 carbons are sebacic acid.

In particular, in the polyamide resin of the second embodiment, from 40 to 90 mol% of the dicarboxylic acid-derived structural units are preferably structural units derived from an aromatic dicarboxylic acid (preferably an aromatic dicarboxylic acid selected from isophthalic acid, terephthalic acid, and a phenylenediacetic acid, and more preferably isophthalic acid), and from 10 to 60 mol% of the dicarboxylic acid-derived structural units are preferably structural units derived from an α,ω-linear aliphatic dicarboxylic acid having from 4 to 15 carbons (preferably adipic acid and/or sebacic acid, and more preferably sebacic acid). The total of the structural units derived from an aromatic dicarboxylic acid and the α,ω-linear aliphatic dicarboxylic acid having from 4 to 15 carbons is 100 mol% or less, and preferably from 97 to 100 mol%.

The polyamide resin of the second embodiment may include other dicarboxylic acid-derived structural units in addition to the dicarboxylic acid-derived structural units described above. When other dicarboxylic acids are included, the percentage thereof is preferably not more than 3 mol% and more preferably not more than 1 mol%, of all of the dicarboxylic acid-derived structural units.

The polyamide resin of the second embodiment may include only one type of other dicarboxylic acid-derived structural units, or may include two or more types of other dicarboxylic acid-derived structural units.

Examples of the dicarboxylic acid constituting the dicarboxylic acid-derived structural units that may be contained in the polyamide resin of the second embodiment include an alicyclic dicarboxylic acid. Examples of the alicyclic dicarboxylic acids include cyclohexane dicarboxylic acid, 4,4'-methylenebis(2-methylcyclohexane-1-carboxylic acid), 4,4'-methylenebis(cyclohexane-1-carboxylic acid), 4,4'-oxobis(cyclohexane-1-carboxylic acid), and 4,4'-thiobis(cyclohexane-1-carboxylic acid).

Meanwhile, the polyamide resin of the second embodiment can be configured to be substantially free of alicyclic dicarboxylic acid. "Substantially free" means that the percentage of structural units derived from an alicyclic dicarboxylic acid among dicarboxylic acid-derived structural units is 5 mol% or less, preferably 3 mol% or less, and more preferably 1 mol% or less.

Note that, although the polyamide resin of the second embodiment is composed of dicarboxylic acid-derived structural units and diamine-derived structural units, it may also include other structural units in addition to the dicarboxylic acid-derived structural units and the diamine-derived structural units, or other moieties such as terminal groups. Examples of other structural units include, but are not limited to, structural units derived from, for example, a lactam such as ε-caprolactam, valerolactam, laurolactam, and undecalactam, or from an aminocarboxylic acid such as 11-aminoundecanoic acid and 12-aminododecanoic acid. Furthermore, the polyamide resin of the second embodiment may contain trace amounts of components such as additives used in synthesis.

The polyamide resin of the second embodiment is preferably composed of 70 mass% or more, more preferably 80 mass% or more, even more preferably 90 mass% or more, further preferably 95 mass% or more, and further more preferably 98 mass% or more of dicarboxylic acid-derived structural units and diamine-derived structural units.

The third embodiment of the polyamide resin resulting from the present embodiment is a polyamide resin including diamine-derived structural units and dicarboxylic acid-derived structural units, from 70 to 97 mol% of the diamine-derived structural units being derived from p-benzenediethanamine, from 3 to 30 mol% of the diamine-derived structural units being derived from a diamine represented by Formula (1-1), and 50 mol% or more of the dicarboxylic acid-derived structural units being derived from an aromatic dicarboxylic acid. 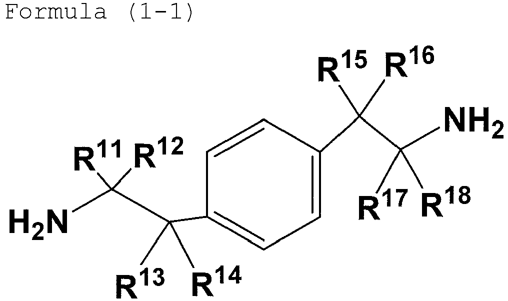 where in Formula (1-1), R¹¹ to R¹⁸ each independently represent a hydrogen atom or an aliphatic group having from 1 to 5 carbons, and at least one of R¹¹ to R¹⁴ and at least one of R¹⁵ to R¹⁸ are each an aliphatic group having from 1 to 5 carbons.

In the third embodiment, from 70 to 97 mol% of the diamine-derived structural units are derived from p-benzenediethanamine, and from 3 to 30 mol% of the diamine-derived structural units are derived from a diamine represented by Formula (1-1). However, the total of p-benzenediethanamine and the diamine represented by Formula (1-1) does not exceed 100 mol%, and is preferably from 90 to 100 mol%, more preferably from 95 to 100 mol%, and even more preferably from 99 to 100 mol%.

In the third embodiment, the percentage of structural units derived from p-benzenediethanamine in the diamine-derived structural units is 70 mol% or more, preferably 75 mol% or more, more preferably 80 mol% or more, even more preferably 84 mol% or more, further preferably 88 mol% or more, and further more preferably 91 mol% or more. The proportion of the structural units derived from the compound represented by Formula (1) is not less than the lower limit described above, and this tends to provide even better mechanical properties at high temperatures. Furthermore, in the present embodiment, the percentage of structural units derived from p-benzenediethanamine amongst the diamine-derived structural units is 97 mol% or less, and preferably 96 mol% or less, and may be 94 mol% or less. When the foregoing percentage is set to equal to or less than the upper limit described above, the mass loss rate at a temperature slightly higher than the melting point can be reduced, and the thermal stability during molding tends to improve.

In the present embodiment, the percentage of structural units derived from a diamine represented by Formula (1-1) in the diamine-derived structural units is 3 mol% or more, and preferably 4 mol% or more, and may be 6 mol% or more. When the foregoing percentage is set to equal to or more than the lower limit described above, the mass loss rate at temperatures slightly higher than the melting point can be reduced, and the thermal stability during molding tends to improve. In the third embodiment, the percentage of structural units derived from a diamine represented by Formula (1-1) in the diamine-derived structural units is 30 mol% or less, preferably 25 mol% or less, more preferably 20 mol% or less, even more preferably 16 mol% or less, further preferably 12 mol% or less, and further more preferably 9 mol% or less. When the percentage of structural units derived from a diamine represented by Formula (1) is not more than the upper limit described above, the mechanical properties at high temperatures tend to be more excellent.

In the third embodiment, the diamine represented by Formula (1-1) in the diamine-derived structural units may be of only one type, or may be of two or more types. When two or more kinds are contained, the total amount thereof is preferably in the above range.

Next, the diamine represented by Formula (1-1) in the third embodiment will be described. In the present embodiment, the diamine represented by Formula (1-1) has at least one aliphatic group having from 1 to 5 carbons substituted in the ethylene chain portion of p-benzenediethanamine. It is presumed that when the diamine has such an aliphatic group, hydrogen bonding between amide groups and stacking of aromatic rings are inhibited without significantly changing the distance between amide groups in the molecular chain, and thereby the melting point can be reduced a certain extent, and the mass loss rate at a temperature slightly higher than the melting point can be reduced. As a result, this is presumed to exhibit more effectively the enhancement effect of the thermal stability during molding.

In Formula (1-1), R¹¹ to R¹⁸ each independently represent a hydrogen atom or an aliphatic group having from 1 to 5 carbons, and at least one of R¹¹ to R¹⁴ and at least one of R¹⁵ to R¹⁸ are each an aliphatic group having from 1 to 5 carbons. The aliphatic group having from 1 to 5 carbons is preferably an aliphatic group having from 1 to 3 carbons, and more preferably an aliphatic group having 1 or 2 carbons. Examples of such aliphatic groups include alkyl groups, alkenyl groups, and alkynyl groups, and of these, alkyl groups are preferable, and linear alkyl groups are more preferable. Examples of the alkyl groups include a methyl group, an ethyl group, an i-propyl group, an i-butyl group and a t-butyl group. The alkyl group is preferably a methyl group or an ethyl group, and is more preferably a methyl group.

In Formula (1-1), preferably, at least one of R¹¹ to R¹⁴ and at least two of R¹⁵ to R¹⁸ are each an aliphatic group having from 1 to 5 carbons, and more preferably two of R¹¹ to R¹⁴ and two of R¹⁵ to R¹⁸ are each an aliphatic group having from 1 to 5 carbons.

In Formula (1-1), R¹¹ to R¹⁸ preferably each independently represent a hydrogen atom or a methyl group. More preferably, R¹¹ and/or R¹², and R¹⁷ and/or R¹⁸ are a hydrogen atom; among R¹¹, R¹², R¹⁷ and R¹⁸, those that are not hydrogen atoms are methyl groups; and R¹³, R¹⁴, R¹⁵ and R¹⁶ are each either a hydrogen atom or a methyl group (preferably a methyl group). Even more preferably, R¹¹, R¹², R¹⁷ and R¹⁸ are each a hydrogen atom, and R¹³, R¹⁴, R¹⁵ and R¹⁶ are each a hydrogen atom or a methyl group (preferably a methyl group). When such a compound is used, the reactivity of amino groups in the diamine represented by Formula (1-1) increases, and as a result, polymerization tends to proceed easily, and productivity tends to increase.

Furthermore, in the third embodiment, a mixture of a compound (compound 1-1) represented by Formula (1-1) in which at least two (preferably two) of R¹¹ to R¹⁴ and at least two (preferably two) of R¹⁵ to R¹⁸ are aliphatic groups having from 1 to 5 carbons and a compound (compound 1-2) represented by Formula (1-1) in which one of R¹¹ to R¹⁴ and one of R¹⁵ to R¹⁸ are aliphatic groups having from 1 to 5 carbons may be used. In the case of a mixture, the mass ratio of the compound 1-1 to the compound 1-2 is preferably from 1:0.1 to 1:1.

In the third embodiment, the diamine-derived structural units may include other structural units in addition to the diamine-derived structural units described above. Examples of such other structural units include those derived from m-benzenediethanamine, o-benzenediethanamine, aliphatic diamines, alicyclic diamines and other aromatic diamines besides benzenediethanamines and diamines represented by Formula (1-1).

The third embodiment of the polyamide resin may contain only one type of other diamine-derived structural units or may contain two or more types of other diamine-derived structural units.

The aliphatic diamines, the alicyclic diamines, and the other aromatic diamines have the same definitions as the aliphatic diamines, the alicyclic diamines, and the other aromatic diamines described in the section about the polyamide resin of the first embodiment, and preferred ranges thereof are also the same.

In the polyamide resin of the third embodiment, 50 mol% or more of the dicarboxylic acid-derived structural units are derived from an aromatic dicarboxylic acid (preferably isophthalic acid). An aromatic dicarboxylic acid-derived structural unit is contained, and this tends to provide a polyamide resin having a higher melting point and a higher glass transition temperature.

In the third embodiment, the percentage of structural units derived from an aromatic dicarboxylic acid in the dicarboxylic acid-derived structural units is 50 mol% or more, preferably 70 mol% or more, more preferably 80 mol% or more, even more preferably 90 mol% or more, further preferably more than 95 mol%, and further more preferably 99 mol% or more. The proportion of the aromatic dicarboxylic acid-derived structural units is not less than the lower limit described above, and this tends to improve the crystallinity of the polyamide resin and tends to improve the degree of crystallization of a molded article and the strength when the polyamide resin is molded at high temperatures. In the present embodiment, the upper limit of the proportion of aromatic dicarboxylic acid-derived structural units in the dicarboxylic acid-derived structural units is 100 mol% or less.

The details of the aromatic dicarboxylic acid in the third embodiment are the same as those described in the section about aromatic dicarboxylic acid in the first embodiment, and the preferred ranges are also the same.

The polyamide resin of the present embodiment may contain a dicarboxylic acid-derived structural unit other than the aromatic dicarboxylic acid-derived structural unit. Examples of the dicarboxylic acid constituting the dicarboxylic acid-derived structural unit other than the aromatic dicarboxylic acid-derived structural unit include aliphatic dicarboxylic acids. A known aliphatic dicarboxylic acid can be used as the aliphatic dicarboxylic acid, and examples include succinic acid, glutaric acid, adipic acid, pimelic acid, suberic acid, azelaic acid, sebacic acid, and dodecanedicarboxylic acid.

Meanwhile, the third embodiment of polyamide resin can be configured to be substantially free of structural units derived from an aliphatic dicarboxylic acid. "Substantially free" means that the percentage of structural units derived from an aliphatic dicarboxylic acid among the dicarboxylic acid-derived structural units is 5 mol% or less, preferably 3 mol% or less, and more preferably 1 mol% or less.

In addition, in the polyamide resin of the third embodiment, more than 95 mol% (preferably 96 mol% or more, and more preferably 98 mol% or more, and 100 mol% or less) of the diamine-derived structural units and the dicarboxylic acid-derived structural units are preferably structural units having a cyclic structure. Through such a constitution, a polyamide resin having a high melting point and a higher glass transition temperature can be obtained. Furthermore, such a constitution can reduce the mass loss rate. Moreover, the enthalpy change (ΔH) when melting can be reduced, and the moldability tends to further improve. In addition, the amount of outgassing can be reduced. A structural unit having a cyclic structure means that the structural unit contains a cyclic structure, such as an aromatic ring or an alicyclic ring. A structural unit having one cyclic structure preferably includes either an aromatic ring or an alicyclic ring.

Specific examples of the polyamide resin of the third embodiment include the following. It goes without saying that the polyamide resin of the third embodiment is not limited to the following examples.
(1) A polyamide resin in which from 80 to 97 mol% (preferably from 84 to 97 mol%) of the diamine-derived structural units are derived from p-benzenediethanamine, from 3 to 20 mol% (preferably from 3 to 16 mol%) of the diamine-derived structural units are derived from a diamine represented by Formula (1-1), and from 90 to 100 mol% (preferably from 95 to 100 mol%, more preferably from 98 to 100 mol%) of the dicarboxylic acid-derived structural units are derived from isophthalic acid.
(2) A polyamide resin in which from 70 to 80 mol% of the diamine-derived structural units are derived from p-benzenediethanamine, from 20 to 30 mol% of the diamine-derived structural units are derived from a diamine represented by Formula (1-1), from 90 to 100 mol% (preferably, from 95 to 100 mol%, more preferably from 98 to 100 mol%) of the dicarboxylic acid-derived structural units are derived from terephthalic acid, and from 0 to 10 mol% of the dicarboxylic acid-derived structural units are derived from 1,4-cyclohexane dicarboxylic acid.

In (1) and (2) above, the total of structural units derived from p-benzenediethanamine and structural units derived from a diamine represented by Formula (1-1) is 100 mol% or less, preferably from 95 to 100 mol%, and more preferably from 98 to 100 mol%.

Note that, although the polyamide resin of the third embodiment is composed of dicarboxylic acid-derived structural units and diamine-derived structural units, it may also include other structural units in addition to the dicarboxylic acid-derived structural units and the diamine-derived structural units, or other moieties such as terminal groups. Examples of other structural units include, but are not limited to, structural units derived from, for example, a lactam such as ε-caprolactam, valerolactam, laurolactam, and undecalactam, or from an aminocarboxylic acid such as 11-aminoundecanoic acid and 12-aminododecanoic acid. Furthermore, the polyamide resin of the present embodiment may contain trace amounts of other components such as an additive used in synthesis.

The polyamide resin of the third embodiment is preferably composed of 70 mass% or more, more preferably 80 mass% or more, even more preferably 90 mass% or more, further preferably 95 mass% or more, and further more preferably 98 mass% or more of dicarboxylic acid-derived structural units and diamine-derived structural units.

The polyamide resin of the fourth embodiment includes diamine-derived structural units and dicarboxylic acid-derived structural units, with more than 30 mol% of the diamine-derived structural units being derived from a diamine represented by Formula (1-1) and more than 30 mol% of the dicarboxylic acid-derived structural units being derived from an aromatic dicarboxylic acid. 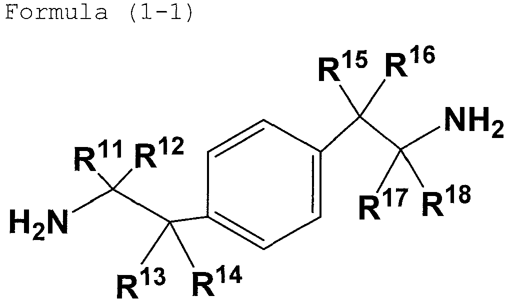 where in Formula (1-1), R¹¹ to R¹⁸ each independently represent a hydrogen atom or an aliphatic group having from 1 to 5 carbons, and at least one of R¹¹ to R¹⁴ and at least one of R¹⁵ to R¹⁸ are each an aliphatic group having from 1 to 5 carbons.

The diamine represented by Formula (1-1) in the fourth embodiment has the same definition as the diamine represented by Formula (1-1) in the third embodiment, and the preferred ranges thereof are also the same.

In the fourth embodiment, the diamine-derived structural units may include other structural units in addition to structural units derived from the diamine represented by Formula (1-1). Examples of such other structural units include those derived from p-benzenediethanamine, m-benzenediethanamine, o-benzenediethanamine, aliphatic diamines, alicyclic diamines, and other aromatic diamines besides benzenediethanamines and diamines represented by Formula (1-1). From the viewpoints of high rigidity and flame retardancy, p-benzenediethanamine is preferable.

The aliphatic diamines, the alicyclic diamines, and the other aromatic diamines have the same definitions as the aliphatic diamines, the alicyclic diamines, and the other aromatic diamines described in the section about the polyamide resin of the first embodiment, and preferred ranges thereof are also the same.

In the fourth embodiment, preferably, more than 30 mol% and 100 mol% or less of the diamine-derived structural units are derived from a diamine represented by Formula (1-1) and from 70 mol% to 0 mol% of the diamine-derived structural units are derived from p-benzenediethanamine, and more preferably, more than 30 mol% and 100 mol% or less of the diamine-derived structural units are derived from a diamine represented by Formula (1-1) and from 70 mol% to 0 mol% of the diamine-derived structural units are derived from p-benzenediethanamine, and 90 mol% or more (preferably 95 mol% or more, more preferably 99 mol% or more, and preferably 100 mol% or less) of the diamine-derived structural units are structural units derived from a diamine represented by Formula (1-1) or from p-benzenediethanamine. With such a constitution, the low water absorption rate, high Tg, and high rigidity can be further improved in a well-balanced manner.

The polyamide resin of the fourth embodiment may contain only one type of other diamine-derived structural units or may contain two or more types of other diamine-derived structural units.

In the polyamide resin of the fourth embodiment, more than 30 mol% of the dicarboxylic acid-derived structural units are derived from an aromatic dicarboxylic acid. Including a structural unit derived from an aromatic dicarboxylic acid tends to result in a polyamide resin having a higher glass transition temperature.

In the present embodiment, the percentage of structural units derived from an aromatic dicarboxylic acid among the dicarboxylic acid-derived structural units is more than 30 mol%, preferably 40 mol% or more, more preferably 45 mol% or more, even more preferably 55 mol% or more, yet even more preferably more than 60 mol%, still even more preferably 80 mol% or more, further preferably 90 mol% or more, particularly preferably 95 mol% or more, and even more particularly preferably 99 mol% or more. The strength when molded at a high temperature tends to further improve when the percentage thereof is set to equal to or more than the lower limit described above. In the present embodiment, the upper limit of the proportion of aromatic dicarboxylic acid-derived structural units in the dicarboxylic acid-derived structural units is 100 mol% or less.

The details of the aromatic dicarboxylic acid in the fourth embodiment are the same as those described in the section about aromatic dicarboxylic acid in the first embodiment, and the preferred ranges are also the same.

In the polyamide resin of the fourth embodiment, of the structural units derived from an aromatic dicarboxylic acid, the percentage of structural units derived from an aromatic dicarboxylic acid (preferably isophthalic acid) selected from isophthalic acid, terephthalic acid, and a phenylenediacetic acid is preferably more than 30 mol%, more preferably 40 mol% or more, even more preferably 45 mol% or more, further preferably 55 mol% or more, further more preferably more than 60 mol%, yet further more preferably 80 mol% or more, even further more particularly preferably 90 mol% or more, still more particularly preferably 95 mol% or more, and most preferably 99 mol% or more. The upper limit is 100 mol% or less.

The polyamide resin of the fourth embodiment may contain other dicarboxylic acid-derived structural units in addition to the structural units derived from an aromatic dicarboxylic acid. Examples of the dicarboxylic acid constituting the dicarboxylic acid-derived structural unit other than the aromatic dicarboxylic acid-derived structural unit include aliphatic dicarboxylic acids. Examples of the number of carbons of the aliphatic carboxylic acid include a range from 2 to 20, preferably from 4 to 18, and more preferably from 8 to 14. Specific examples of the aliphatic dicarboxylic acid include succinic acid, glutaric acid, adipic acid, pimelic acid, suberic acid, azelaic acid, sebacic acid, and dodecanedioic acid, and of these, sebacic acid and dodecanedioic acid are preferable, and dodecanedioic acid is more preferable.

When the polyamide resin of the fourth embodiment contains structural units derived from an aliphatic dicarboxylic acid, the percentage of the structural units derived from an aliphatic dicarboxylic acid is, in relation to all dicarboxylic acid-derived structural units, preferably 60 mol% or less, more preferably 55 mol% or less, even more preferably 45 mol% or less, further preferably 40 mol% or less, further more preferably 20 mol% or less, and yet further more preferably 10 mol% or less. When the polyamide resin of the fourth embodiment includes structural units derived from an aliphatic dicarboxylic acid, the lower limit of the percentage of the structural units derived from an aliphatic dicarboxylic acid is more than 5 mol%.

Meanwhile, the polyamide resin of the fourth embodiment can be configured to be substantially free of structural units derived from an aliphatic dicarboxylic acid. "Substantially free" means that the percentage of structural units derived from an aliphatic dicarboxylic acid among the dicarboxylic acid-derived structural units is 5 mol% or less, preferably 3 mol% or less, and more preferably 1 mol% or less.

The polyamide resin according to the present embodiment may include only a single type of a structural unit derived from an aliphatic dicarboxylic acid, or may include two or more types.

Specific examples of the polyamide resin of the fourth embodiment include the following. It goes without saying that the polyamide resin of the fourth embodiment is not limited to the following examples.
(1) A polyamide resin in which from more than 30 mol% and 100 mol% or less of the diamine-derived structural units are derived from a diamine represented by Formula (1-1), from 70 mol% to 0 mol% of the diamine-derived structural units are derived from p-benzenediethanamine, and more than 30 mol% of the dicarboxylic acid-derived structural units are derived from an aromatic dicarboxylic acid (preferably isophthalic acid)
(2) A polyamide resin in which more than 30 mol% of the diamine-derived structural units are derived from a diamine represented by Formula (1-1), more than 30 mol% and 100 mol% or less of the dicarboxylic acid-derived structural units are derived from an aromatic dicarboxylic acid (preferably isophthalic acid), and from 70 mol% to 0 mol% of the dicarboxylic acid-derived structural units are derived from an aliphatic dicarboxylic acid (preferably dodecanedioic acid).
(3) A polyamide resin in which more than 30 mol% and 100 mol% or less of the diamine-derived structural units are derived from a diamine represented by Formula (1-1), from 70 mol% to 0 mol% of the diamine-derived structural units are derived from p-benzenediethanamine, more than 30 mol% and 100 mol% or less of the dicarboxylic acid-derived structural units are derived from an aromatic dicarboxylic acid (preferably isophthalic acid), and from 70 mol% to 0 mol% of the dicarboxylic acid-derived structural units are derived from an aliphatic dicarboxylic acid (preferably dodecanedioic acid).
(4) A polyamide resin in which more than 30 mol% and 100 mol% or less of the diamine-derived structural units are derived from a diamine represented by Formula (1-1), from 70 mol% to 0 mol% of the diamine-derived structural units are derived from p-benzenediethanamine, and from 55 mol% to 100 mol% of the dicarboxylic acid-derived structural units are derived from an aromatic dicarboxylic acid (preferably isophthalic acid).

In (1) to (4) above, the total of structural units derived from a diamine represented by Formula (1-1) and structural units derived from p-benzenediethanamine is 100 mol% or less, preferably from 95 to 100 mol%, and more preferably from 98 to 100 mol%. Furthermore, the total of structural units derived from an aromatic dicarboxylic acid (preferably isophthalic acid) and structural units derived from an aliphatic dicarboxylic acid (preferably dodecanedioic acid) is 100 mol% or less, preferably from 95 to 100 mol%, and more preferably from 98 to 100 mol%.

Note that, although the polyamide resin of the fourth embodiment is composed of dicarboxylic acid-derived structural units and diamine-derived structural units, it may also include other structural units in addition to the dicarboxylic acid-derived structural units and the diamine-derived structural units, or other moieties such as terminal groups. Examples of other structural units include, but are not limited to, structural units derived from, for example, a lactam such as ε-caprolactam, valerolactam, laurolactam, and undecalactam, or from an aminocarboxylic acid such as 11-aminoundecanoic acid and 12-aminododecanoic acid. Furthermore, the polyamide resin of the fourth embodiment may contain trace amounts of components such as additives used in synthesis.

The polyamide resin of the fourth embodiment is preferably composed of 70 mass% or more, more preferably 80 mass% or more, even more preferably 90 mass% or more, further preferably 95 mass% or more, and further more preferably 98 mass% or more of dicarboxylic acid-derived structural units and diamine-derived structural units.

The polyamide resin of the fifth embodiment includes diamine-derived structural units and dicarboxylic acid-derived structural units, with 50 mol% or more of the diamine-derived structural units being derived from a compound represented by Formula (1-2), and more than 50 mol% of the dicarboxylic acid-derived structural units being derived from an aromatic dicarboxylic acid. 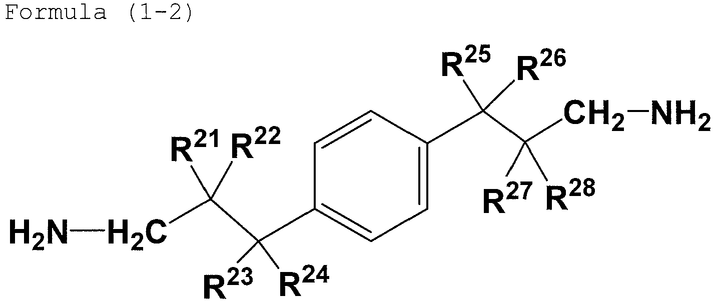 where in Formula (1-2), R²¹ to R²⁸ each independently represent a hydrogen atom or an aliphatic group having from 1 to 5 carbons.

In Formula (1-2), R²¹ to R²⁸ each independently represent a hydrogen atom or an aliphatic group having from 1 to 5 carbons, preferably all of R²¹ to R²⁸ are hydrogen atoms, or at least one of R²¹ to R²⁴ and at least one of R²⁵ to R²⁸ are aliphatic groups having from 1 to 5 carbons, and more preferably all of R²¹ to R²⁸ are hydrogen atoms.

The aliphatic groups having from 1 to 5 carbons is preferably an aliphatic group having from 1 to 3 carbons, and more preferably an aliphatic group having 1 or 2 carbons. Examples of such aliphatic groups include alkyl groups, alkenyl groups, and alkynyl groups, and of these, alkyl groups are preferable, and linear alkyl groups are more preferable. Examples of the alkyl groups include a methyl group, an ethyl group, an i-propyl group, an i-butyl group and a t-butyl group. The alkyl group is preferably a methyl group or an ethyl group, and is more preferably a methyl group.

The compound represented by Formula (1-2) preferably includes p-benzenedipropanamine.

In addition, in the fifth embodiment, preferably, from 70 to 100 mol% of the compound represented by Formula (1-2) is derived from p-benzenedipropanamine while from 0 to 30 mol% of the compound represented by Formula (1-2) is a compound represented by Formula (1-2) in which at least one of R²¹ to R²⁸ is an aliphatic group having from 1 to 5 carbons (preferably at least one of R²¹ to R²⁴ and at least one of R²⁵ to R²⁸ are aliphatic groups having from 1 to 5 carbons, and more preferably at least one of R²¹ to R²⁴ and at least one of R²⁵ to R²⁸ are methyl groups); more preferably, from 90 to 100 mol% of the compound represented by Formula (1-2) is derived from p-benzenedipropanamine while from 0 to 10 mol% of the compound represented by Formula (1-2) is a compound represented by Formula (1-2) in which at least one of R²¹ to R²⁸ is an aliphatic group having from 1 to 5 carbons; even more preferably, from 95 to 100 mol% of the compound represented by Formula (1-2) is derived from p-benzenedipropanamine while from 0 to 5 mol% of the compound represented by Formula (1-2) is a compound represented by Formula (1-2) in which at least one of R²¹ to R²⁸ is an aliphatic group having from 1 to 5 carbons; and further preferably, from 99 to 100 mol% of the compound represented by Formula (1-2) is derived from p-benzenedipropanamine while from 0 to 1 mol% of the compound represented by Formula (1-2) is a compound represented by Formula (1-2) in which at least one of R²¹ to R²⁸ is an aliphatic group having from 1 to 5 carbons.

In the fifth embodiment, using the compound represented by Formula (1-2) including substitution with an aliphatic group having from 1 to 5 carbons presumably inhibits hydrogen bonding between amide groups and stacking of aromatic rings without significantly changing the distance between the amide groups in the molecular chain, which supposedly reduces the melting point to a certain extent and reduces the mass loss rate at a temperature slightly higher than the melting point. As a result, this is presumed to exhibit more effectively the enhancement effect of the thermal stability during molding.

In the fifth embodiment, the percentage of the structural units derived from the compound represented by Formula (1-2) (preferably p-benzenedipropanamine) in the diamine-derived structural units is 50 mol% or more, preferably more than 57 mol%, even more preferably 60 mol% or more, further preferably 70 mol% or more, further more preferably 80 mol% or more, yet further more preferably 90 mol% or more, still more preferably 95 mol% or more, and yet still more preferably 99 mol% or more. The proportion of the structural units derived from the compound represented by Formula (1) is not less than the lower limit described above, and this tends to provide even better mechanical properties at high temperatures. In addition, in the fifth embodiment, the upper limit of the percentage of the structural units derived from the compound represented by Formula (1-2) (preferably p-benzenedipropanamine) in the diamine-derived structural units is 100 mol% or less.

In the fifth embodiment, the compound represented by Formula (1-2) in the diamine-derived structural units may be of only one type, or may be of two or more types, as described above. When two or more kinds are contained, the total amount thereof is preferably in the above range.

In the fifth embodiment, the diamine-derived structural units may include other structural units in addition to those described above. Examples of such other structural units include those derived from aliphatic diamines, alicyclic diamines, and other aromatic diamines besides benzenediethanamines and diamines represented by Formula (1-2).

The polyamide resin of the fifth embodiment may contain only one type of other diamine-derived structural units or may contain two or more types of other diamine-derived structural units.

The aliphatic diamines, the alicyclic diamines, and the other aromatic diamines have the same definitions as the aliphatic diamines, the alicyclic diamines, and the other aromatic diamines described in the section about the polyamide resin of the first embodiment, and preferred ranges thereof are also the same.

In the polyamide resin of the fifth embodiment, more than 50 mol% of the dicarboxylic acid-derived structural units are derived from an aromatic dicarboxylic acid. An aromatic dicarboxylic acid-derived structural unit is contained, and this tends to provide a polyamide resin having a higher melting point and a higher glass transition temperature.

In the fifth embodiment, the percentage of structural units derived from an aromatic dicarboxylic acid in the dicarboxylic acid-derived structural units is more than 50 mol%, preferably 70 mol% or more, more preferably 80 mol% or more, even more preferably 90 mol% or more, further preferably more than 95 mol%, and further more preferably 99 mol% or more. The proportion of the aromatic dicarboxylic acid-derived structural units is not less than the lower limit described above, and this tends to improve the crystallinity of the polyamide resin and tends to improve the degree of crystallization of a molded article and the strength when the polyamide resin is molded at high temperatures. In the fifth embodiment, the upper limit of the percentage of structural units derived from an aromatic dicarboxylic acid in the dicarboxylic acid-derived structural units is 100 mol% or less.

A preferred example of the aromatic dicarboxylic acid in the fifth embodiment is a p-aromatic dicarboxylic acid. Increasing the proportion of the p-aromatic dicarboxylic acid can increase the crystallinity of the resulting polyamide resin. The p-aromatic dicarboxylic acid means that two carboxyl groups or substituents containing a carboxyl group are bonded to a benzene ring in a para-position. Examples include terephthalic acid and p-phenylenediacetic acid, with terephthalic acid being preferable.

The aromatic dicarboxylic acid in the fifth embodiment may contain other aromatic dicarboxylic acids in addition to the p-aromatic dicarboxylic acid. Examples of the other aromatic dicarboxylic acids in addition to the p-aromatic dicarboxylic acid include the aromatic dicarboxylic acids described in the section about aromatic dicarboxylic acid in the first embodiment.

In the polyamide resin of the fifth embodiment, 90 mol% or more (preferably more than 95 mol% and more preferably 99 mol% or more) of structural units derived from an aromatic dicarboxylic acid are preferably selected from structural units derived from isophthalic acid, terephthalic acid, or a phenylenediacetic acid, and are more preferably structural units derived from terephthalic acid.

The polyamide resin of the fifth embodiment may contain other dicarboxylic acid-derived structural units in addition to the structural units derived from an aromatic dicarboxylic acid. Examples of the dicarboxylic acid constituting the dicarboxylic acid-derived structural unit other than the aromatic dicarboxylic acid-derived structural unit include aliphatic dicarboxylic acids. A known aliphatic dicarboxylic acid can be used as the aliphatic dicarboxylic acid, and examples include succinic acid, glutaric acid, adipic acid, pimelic acid, suberic acid, azelaic acid, sebacic acid, and dodecanedicarboxylic acid.

Meanwhile, the polyamide resin of the fifth embodiment can be configured to be substantially free of structural units derived from an aliphatic dicarboxylic acid. "Substantially free" means that the percentage of structural units derived from an aliphatic dicarboxylic acid among the dicarboxylic acid-derived structural units is 5 mol% or less, preferably 3 mol% or less, and more preferably 1 mol% or less.

In addition, in the polyamide resin of the fifth embodiment, more than 95 mol% (preferably 96 mol% or more, and more preferably 98 mol% or more, and 100 mol% or less) of the diamine-derived structural units and the dicarboxylic acid-derived structural units are preferably structural units having a cyclic structure. Such a constitution provides a polyamide resin having a higher melting point and a higher glass transition temperature. Furthermore, such a constitution can reduce the mass loss rate. Moreover, a cooling crystallization enthalpy change (ΔH(Tcc)) is increased, and this tends to further improve the moldability. In addition, the amount of outgassing can be reduced. A structural unit having a cyclic structure means that the structural unit contains a cyclic structure, such as an aromatic ring or an alicyclic ring. A structural unit having one cyclic structure (typically a structural unit formed from one monomer) preferably contains either an aromatic ring or an alicyclic ring.

Specific examples of the polyamide resin of the fifth embodiment include the following. It goes without saying that the polyamide resin of the fifth embodiment is not limited to the following examples.
(1) A polyamide resin in which 70 mol% or more (preferably from 90 to 100 mol%, more preferably from 95 to 100 mol%, and even more preferably from 98 to 100 mol%) of the diamine-derived structural units are derived from p-benzenedipropanamine and more than 70 mol% (preferably from 90 to 100 mol%, more preferably from 94 to 100 mol%, and even more preferably from 97 to 100 mol%) of the dicarboxylic acid-derived structural units are derived from terephthalic acid
(2) a polyamide resin in which 70 mol% or more (preferably from 90 to 100 mol%, more preferably from 95 to 100 mol%, and even more preferably from 98 to 100 mol%) of the diamine-derived structural units are derived from p-benzenedipropanamine and from 90 to 100 mol% (preferably from 95 to 100 mol% and more preferably from 98 to 100 mol%) of the dicarboxylic acid-derived structural units are derived from a phenylenediacetic acid (preferably m-phenylenediacetic acid and/or p-phenylenediacetic acid, and more preferably p-phenylenediacetic acid).
(3) a polyamide resin in which from 90 to 100 mol% (preferably from 95 to 100 mol% and more preferably from 98 to 100 mol%) of the diamine-derived structural units are derived from p-benzenedipropanamine, from 80 to 95 mol% (preferably from 85 to 95 mol%) of the dicarboxylic acid-derived structural units are derived from terephthalic acid, and from 20 to 5 mol% (preferably from 15 to 5 mol%) of the dicarboxylic acid-derived structural units are derived from a cyclohexanedicarboxylic acid (preferably 1,4-cyclohexanedicarboxylic acid).

Note that, although the polyamide resin of the fifth embodiment includes dicarboxylic acid-derived structural units and diamine-derived structural units, it may also include other structural units in addition to the dicarboxylic acid-derived structural units and the diamine-derived structural units, or other moieties such as terminal groups. Examples of other structural units include, but are not limited to, structural units derived from, for example, a lactam such as ε-caprolactam, valerolactam, laurolactam, and undecalactam, or from an aminocarboxylic acid such as 11-aminoundecanoic acid and 12-aminododecanoic acid. Furthermore, the polyamide resin of the fifth embodiment may contain trace amounts of components such as additives used in synthesis.

The polyamide resin of the fifth embodiment is preferably composed of 70 mass% or more, more preferably 80 mass% or more, even more preferably 90 mass% or more, further preferably 95 mass% or more, and further more preferably 98 mass% or more of dicarboxylic acid-derived structural units and diamine-derived structural units.

### <Applications>

The polyamide resin resulting from the method for producing the present embodiment can be used as a resin composition containing the polyamide resin resulting from the method for producing the present embodiment. In addition, the polyamide resin described above can be used as the resin composition containing the polyamide resin regardless of the production method. Further, the resin composition can be molded and used as a molded article. The resin composition may contain only one or more types of the polyamide resin, or may contain other components.

As other components, other polyamide resins in addition to the polyamide resin describe above, thermoplastic resins in addition to polyamide resins, additives such as reinforcing materials, fillers, matting agents, antioxidants such as heat resistant stabilizers and weather resistant stabilizers, ultraviolet absorbents, plasticizers, flame retardants, flame retardant aids, nucleating agents, mold release agents, antistatic agents, coloring inhibitors, and anti-gelling agents can be added as necessary. One, or two or more of these additives may each be used. Details thereof can be found in the disclosure in paragraphs [0043] to [0103] of PCT/JP2021/019513, the contents of which are incorporated herein.

An example of the resin composition according to the present embodiment is a resin composition including a polyamide resin and a reinforcing material, the polyamide resin including diamine-derived structural units and dicarboxylic acid-derived structural units, with more than 30 mol% of the diamine-derived structural units being structural units represented by Formula (1) and 20 mol% or more of the dicarboxylic acid-derived structural units being structural units derived from an aromatic dicarboxylic acid. 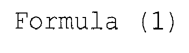 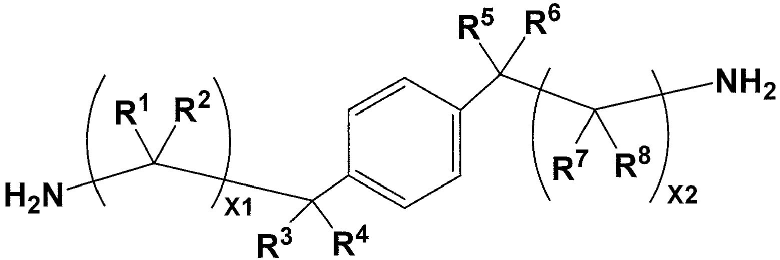 where in Formula (1), R¹ to R⁸ each independently represent a hydrogen atom or an aliphatic group having from 1 to 5 carbons; X1 and X2 are each independently 1 or 2.

The resin composition of the present embodiment preferably contains a reinforcing material at a percentage of from 5.0 to 60.0 mass%.

The type of reinforcing material that can be used in the present embodiment is not particularly specified, and the reinforcing material may be any type, such as fibers, a filler, flakes, or beads, but fibers are preferable.

When the reinforcing material is fibers, the fibers may be short fibers or long fibers.

When the reinforcing material is short fibers or a filler or beads, etc., examples of the form of the resin composition of the present embodiment include pellets, powdered pellets, and a film formed from the pellets.

When the reinforcing material is long fibers, examples of the reinforcing material include long fibers for a so-called, uni-directional (UD) material, and sheet-like long fibers such as a woven or knitted fabric. When these long fibers are used, a sheet-shaped resin composition (for example, a prepreg) can be formed by impregnating the components other than the reinforcing material of the resin composition of the present embodiment into the reinforcing material, which is long fibers formed into a sheet shape.

Examples of the raw material of the reinforcing material include inorganic materials such as glass, carbon (carbon fibers, etc.), alumina, boron, ceramic, metal (steel, etc.), asbestos, clay, zeolite, potassium titanate, barium sulfate, titanium oxide, silicon oxide, aluminum oxide, and magnesium hydroxide, and organic materials such as plants (including, for example, kenaf and bamboo), aramid, polyoxymethylene, aromatic polyamides, polyparaphenylene benzobisoxazole, and ultra-high molecular weight polyethylene, and of these, glass is preferable.

The resin composition of the present embodiment preferably contains glass fibers as the reinforcing material.

The glass fibers are selected from glass compositions such as A glass, C glass, E glass, R glass, D glass, M glass, and S glass, and E glass (non-alkaline glass) is particularly preferable.

The term glass fiber refers to a fibrous material having a perfect circular or polygonal cross-sectional shape when the glass fiber is cut at an angle perpendicular to the length direction. The number average fiber diameter of a single glass fiber is usually from 1 to 25 µm, and preferably from 5 to 17 µm. Moldability of the resin composition tends to improve when the number average fiber diameter is set to 1 µm or more. In addition, the appearance of the obtained molded body and the reinforcing effect tend to improve by setting the number average fiber diameter to 25 um or less. The glass fiber may be a single fiber or a fiber obtained by intertwining a plurality of single fibers.

The form of the glass fiber may be any of a glass roving in which a single fiber or a plurality of intertwined single fibers are continuously wound, chopped strands cut to uniform lengths of from 1 to 10 mm (namely, glass fibers having a number average fiber length of from 1 to 10 mm), or milled fibers crushed to an approximate length of from 10 to 500 µm (namely, glass fibers having a number average fiber length of from 10 to 500 µm), and chopped strands cut to uniform lengths of from 1 to 10 mm are preferable. Glass fibers of different forms may be used in combination.

Also, the glass fiber preferably has an irregular cross-sectional shape. In this irregular cross-sectional shape, the flatness represented by the major axis/minor axis ratio of a cross-section perpendicular to the length direction of the fiber is, for example, from 1.5 to 10, preferably from 2.5 to 10, more preferably from 2.5 to 8, and particularly preferably from 2.5 to 5.

As long as the characteristics of the resin composition of the present embodiment are not significantly impaired, the glass fiber may be, for example, a glass fiber that has been oxidized or a glass fiber that has been surface treated with a silane-based compound, an epoxy-based compound, a urethane-based compound, or the like in order to improve affinity with the resin component.

The reinforcing material used in the present embodiment may be a reinforcing material having electrical conductivity. Specific examples of such reinforcing materials include metals, metal oxides, conductive carbon compounds, and conductive polymers, and conductive carbon compounds are preferable.

Examples of the metal include those formed from copper, nickel, silver, and stainless steel, and a metal filler, stainless steel fibers, and a magnetic filler are preferable. Examples of the metal oxide include alumina and zinc oxide, and alumina fibers and zinc oxide nanotubes are preferable. The conductive carbon compound is preferably carbon black, Ketjen carbon, graphene, graphite, fullerenes, carbon nanocoils, carbon nanotubes, or carbon fibers, and is more preferably carbon nanotubes.

Fibers coated with a metal, a metal compound, or a conductive carbon compound are also preferable. Examples thereof include metal-coated fibers and potassium titanate whiskers coated with carbon.

For details on the other reinforcing materials, refer to the disclosure in paragraphs [0033] to [0041] of JP 2021-031633 A, the contents of which are incorporated in the present description.

When the resin composition according to the present embodiment contains a reinforcing material (preferably glass fibers), the content of the reinforcing material is preferably 10 parts by mass or more, more preferably 20 parts by mass or more, even more preferably 30 parts by mass or more, and still even more preferably 40 parts by mass or more, per 100 parts by mass of the polyamide resin. The mechanical strength of the obtained molded body tends to further improve by setting the content of the reinforcing material to equal to or more than the lower limit described above. The content of the reinforcing material (preferably glass fibers) is also preferably 100 parts by mass or less, more preferably 90 parts by mass or less, even more preferably 85 parts by mass or less, yet even more preferably 80 parts by mass or less, and still even more preferably 75 parts by mass or less, per 100 parts by mass of the polyamide resin. Setting the content of the reinforcing material to equal to or less than the upper limit described above tends to improve the appearance of the molded body and further improve the fluidity of the resin composition.

The resin composition in the present embodiment may contain only a single type of reinforcing material (preferably glass fibers), or may contain two or more types. When two or more kinds are contained, the total amount thereof is preferably in the above range.

### Molded Article

A molded article is formed from the polyamide resin resulting from the method for producing the present embodiment or the resin composition of the present embodiment.

The method for molding the molded article is not particularly limited, and well-known molding methods can be adopted. Examples thereof include an injection molding method, an injection-compression molding method, an extrusion molding method, a profile extrusion method, a transfer molding method, a hollow molding method, a gas-assisted hollow molding method, a blow molding method, extrusion blow molding, an in-mold coating (IMC) molding method, a rotary molding method, a multi-layer molding method, a two-color molding method, an insert molding method, a sandwich molding method, a foaming molding method, a pressure molding method, stretching, and vacuum molding.

Examples of molded articles formed from the composition of the present embodiment include injection molded articles, thin-wall molded articles, hollow molded articles, films (including plates and sheets), cylindrical molded articles (hoses, tubes, etc.), ring-shaped molded articles, circular molded articles, elliptical molded articles, gear-shaped molded articles, polygonal-shaped molded articles, irregular shaped molded articles, hollow articles, frame-shaped molded articles, box-shaped molded articles, panel-shaped extrusion molded articles, and fibers.

The polyamide resin or polyamide resin composition resulting from the method for producing the present embodiment is further preferably used as the following materials.

A prepreg in which the polyamide resin or polyamide resin composition resulting from the method for producing the present embodiment is impregnated in a reinforcing material described above (particularly, a reinforcing material, preferably carbon fibers or glass fibers); a mixed fiber yarn, a braided yarn, or a twisted yarn containing, as a fiber component, a continuous reinforcing material and continuous thermoplastic resin fibers containing the polyamide resin or polyamide resin composition resulting from the method for producing the present embodiment; a woven fabric or knitted fabric that contains a continuous reinforcing material and continuous thermoplastic resin fibers containing the polyamide resin or polyamide resin composition resulting from the method for producing the present embodiment; and a nonwoven fabric composed of a reinforcing material and thermoplastic resin fibers containing the polyamide resin or polyamide resin composition resulting from the method for producing the present embodiment

The molded articles can be used in films, sheets, tubes, pipes, gears, cams, various housings, rollers, impellers, bearing retainers, spring holders, clutch parts, chain tensioners, tanks, wheels, connectors, switches, sensors, sockets, capacitors, hard disk parts, jacks, fuse holders, relays, coil bobbins, resistors, IC housings, LED reflectors, intake pipes, blow-by tubes, 3D printer base materials, automotive parts such as automobile interior and exterior components, engine room parts, cooling system parts, sliding parts, and electrical components, surface-mounted components such as electrical and electronic components, surface-mounted type connectors, sockets, camera modules, power supply parts, switches, sensors, capacitor seat plates, hard disk parts, relays, resistors, fuse holders, coil bobbins, and IC housings, and fuel system components such as fuel caps, fuel tanks, fuel sender modules, fuel cutoff valves, canisters, and fuel piping. Specifically, the fuel system components can be suitably used in various types of equipment provided with an engine that uses a fuel such as gasoline or light oil, examples of the equipment thereof including automobiles, tractors, cultivators, weedwackers, lawnmowers, and chainsaws. Details of the fuel system components can be found in the disclosure in paragraphs [0057] to [0061] of WO 2012/098840, the contents of which are incorporated in the present description.

### Examples

The present invention will be described more specifically with reference to examples below. Materials, amounts used, proportions, processing details, processing procedures, and the like described in the following examples can be appropriately changed as long as they do not depart from the spirit of the present invention. Thus, the scope of the present invention is not limited to the specific examples described below.

If a measuring device used in the examples is not readily available due to discontinuation or the like, another device with equivalent performance can be used for measurement.

### Raw materials

p-BDEA: p-benzenediethanamine, synthesized according to the following synthesis example.

### p-BDEA Synthesis Example

The p-benzenediethanamine was obtained by reducing p-xylylene dicyanide (available from Tokyo Chemical Industry Co., Ltd.) under a hydrogen atmosphere and then distilling and purifying the obtained product. The obtained p-BDEA-4Me compound was analyzed by gas chromatography, and the results indicated a purity of 99.7%.

p-BDEA-4Me: Organic synthesis was carried out in accordance with the description of Example 3 of JP 2004-503527 T, and an obtained hydrochloride of p-BDEA-4Me was neutralized, after which p-BDEA-4Me was extracted, the resulting extract was purified by distillation, and the following compound was obtained. The obtained p-BDEA-4Me compound was analyzed by gas chromatography, and the results indicated a purity of 99.7%.

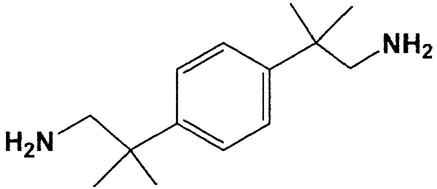

p-BDPA: p-benzenedipropanamine, synthesized according to the following synthesis example.

### p-BDPA Synthesis Example

In an autoclave, 10 g of p-phenyldipropionitrile, 0.3 g of Raney-Ni, and 40 mL of ethanol were charged and reacted at 110°C for 1.5 hours while hydrogen gas was continuously supplied to make the pressure in the reactor constant at 8 MPa. The reactor was cooled to room temperature and hydrogen gas in the reactor was discharged. The contents were filtered and purified by distillation, and p-benzenedipropanamine was obtained. As a result of analysis by gas chromatography, the purity was 99.3%.
Isophthalic acid: available from Tokyo Chemical Industry Co., Ltd.
Terephthalic acid: available from Tokyo Chemical Industry Co., Ltd.
1,4-CHDA: t-1,4-cyclohexanedicarboxylic acid, available from Tokyo Chemical Industry Co., Ltd.
Sebacic acid: available from Tokyo Chemical Industry Co., Ltd.

### Weight Average Molecular Weight (Mw) and Number Average

### Molecular Weight (Mn) of Polyamide Resin

The weight average molecular weight (Mw) and number average molecular weight (Mn) of the polyamide resin were determined by gel permeation chromatography (GPC) based on calibration with standard polymethylmethacrylate (PMMA). Two columns, in which a styrene-based polymer was charged as a filler were used as columns. Hexafluoroisopropanol (HFIP) having a sodium trifluoroacetate concentration of 2 mmol/L was used as a solvent. Thus, the measurement was performed using a resin concentration of 0.02 mass%, a column temperature of 40°C, a flow rate of 0.3 mL/min, and using a refractive index detector (RI). In addition, the calibration curve was measured by dissolving 6 levels of PMMA in HFIP.

In addition, Mw/Mn was calculated from the weight average molecular weight (Mw) and the number average molecular weight (Mn) measured above.

### Example 1

4552 g (27.4 mol) of isophthalic acid, 524 g (3.0 mol) of 1,4-cyclohexanedicarboxylic acid, 5000 g (30.4 mol) of p-benzenediethanamine, 1.48 g (0.0087 mol) of calcium hypophosphite, sodium acetate (0.0116 mol), and 5240 g (added in an amount of 34 mass% with respect to the total amount of substances present in the polymerization reaction system) of water were added to a reaction vessel having an internal volume of 50 L. The atmosphere was replaced with nitrogen, heating was started under stirring, and the internal temperature was raised to 160°C over 1 hour. At this time, stirring was performed using a double helical ribbon stirring blade, and the space between the shaft of the stirring blade and the top plate of the reaction vessel was sealed using pure water as a sealing liquid. Details of the reaction conditions for the early-stage polycondensation step are presented in Table 1.

Thereafter, the internal temperature was raised to 200°C, and 3600 g of water was distilled off over 3 hours (with moisture content after water removal being 24 mass%). Details of the reaction conditions for the water removal step are presented in Table 1.

Subsequently, the internal temperature was raised to 210°C and held for 1 hour. Thereafter, the resulting primary polycondensate was flushed from an outlet at a lower portion of the reaction vessel. Details of the reaction conditions for the late-stage polycondensation step are presented in Table 1.

Subsequently, the resulting primary polycondensate was subjected to solid phase polymerization to increase the degree of polymerization. At this time, the solid phase polymerization was carried out by heating at 260°C for 2 hours in a nitrogen atmosphere using an inert oven. Table 1 presents the molecular weight of the primary polycondensate resulting from synthesis and the molecular weight of the polyamide resin resulting from solid phase polymerization.

### Examples 2 to 8

Examples 2 to 8 were carried out in the same manner as in Example 1 except that the raw material monomers and the like in Example 1 were changed to those presented in Table 1.

**[Table 1]**

| | | Unit | Example 1 | Example 2 | Example 3 | Example 4 | Example 5 | Example 6 | Example 7 | Example 8 |
|---|---|---|---|---|---|---|---|---|---|---|
| Raw Material Monomer | p-BDEA | mol% | 100 | 100 | 100 | 100 | 100 | | 95 | |
| | p-BDEA-4Me | mol% | | | | | | | 5 | 100 |
| | p-BDPA | mol% | | | | | | 100 | | |
| | Isophthalic acid | mol% | 90 | 90 | 90 | 90 | 90 | | 100 | 100 |
| | Terephthalic acid | mol% | | | | | | 100 | | |
| | 1,4-CHDA | mol% | 10 | 10 | 10 | 10 | | | | |
| | Scbacic acid | mol% | | | | | 10 | | | |
| Capacity of Reaction Vessel | | L | 50 | 50 | 6 | 50 | 6 | 6 | 6 | 6 |
| Shape of Stirring Blade | | - | Double Helical Ribbon Blade | | | | | | | |
| Torque During Early-Stage Polycondensation Step | | N·m | 5 | 5 | 1 | 5 | 1 | 1 | 1 | 1 |
| Torque During Water Removal Step | | N·m | 10 | 30 | > 15 | 7 | 6 | 6 | 6 | 6 |
| Torque Magnification | | Times | 2 | 6 | > 15 | 1.4 | 6 | 6 | 6 | 6 |
| Early-Stage Polycondensation Step | Reaction temperature | °C | 160 | 160 | 160 | 200 | 160 | 160 | 160 | 160 |
| | Reaction Pressure | MPa | 0.6 | 0.6 | 0.6 | 1.6 | 0.6 | 0.6 | 0.6 | 0.6 |
| | Moisture Content | mass% | 34 | 34 | 34 | 34 | 34 | 34 | 34 | 34 |
| | Reaction time | hours | 1 | 1 | 1 | 1 | 1 | 1 | 1 | 1 |
| Water Removal Step | Reaction temperature | °C | 200 | 200 | 200 | | 200 | 200 | 200 | 200 |
| | Reaction Pressure | MPa | 1.6 | 1.6 | 1.6 | | 1.6 | 1.6 | 1.6 | 1.6 |
| | Moisture Content | mass% | 24 | 20 | 17 | | 20 | 20 | 20 | 20 |
| | Reaction time | hours | 3 | 3 | 3 | | 3 | 3 | 3 | 3 |
| Late-Stage Polycondensation Step | Reaction temperature | °C | 210 | 230 | 250 | 200 | 230 | 230 | 230 | 230 |
| | Reaction Pressure | MPa | 1.6 | 2.8 | 2.8 | 1.6 | 2.8 | 2.8 | 2.8 | 2.8 |
| | Moisture Content | mass% | 24 | 20 | 17 | 34 | 20 | 20 | 20 | 20 |
| | Reaction time | hours | 1 | 1 | 1 | 1 | 1 | 1 | 1 | 1 |
| Primary Polycondensate | Mn | - | 1100 | 3500 | 7500 | 1000 | 3200 | 3400 | 3300 | 3000 |
| | Mw | - | 4500 | 10200 | 17500 | 1900 | 9900 | 10000 | 9500 | 10200 |
| | Mw/Mn | - | 4.09 | 2.91 | 2.33 | 1.90 | 3.09 | 2.94 | 2.88 | 3.40 |
| Solid Phase Polymerization Condition 2: 260°C/2 hours | | | | | | | | | | |
| Properties of Polyamide Resin | Mn | - | 5200 | 8500 | 14500 | 2200 | 8100 | 8300 | 8000 | 7300 |
| | Mw | - | 42000 | 38300 | 54400 | 5800 | 37500 | 37900 | 36500 | 39200 |
| | Mw/Mn | - | 8.08 | 4.51 | 3.75 | 2.64 | 4.63 | 4.57 | 4.56 | 5.37 |

### Example 9

A nucleating agent (Micron White 500S, available from Hayashi Kasei Co., Ltd.) was weighted to an amount that is 4 parts by mass relative to 100 parts by mass of the polyamide resin obtained in Example 1. The nucleating agent and the polyamide resin obtained in Example 1 were dry-blended, and then fed from the screw root of a twin-screw extruder (available from Shibaura Machinery Co., Ltd., TEM26SX) using a twin-screw cassette weighing feeder (available from Kubota Corporation, CE-W-1-MP). Further, glass fibers (40 parts by mass per 100 parts by mass of polyamide resin, available from Nippon Electric Glass Co., Ltd., T-756H) were fed into the twin-screw extruder from a side of the extruder using a vibrating cassette weighing feeder (available from Kubota Corporation, CE-V-1B-MP), and melt-kneaded with resin components and the like, resulting in resin composition pellets. The temperature of the extruder was set to 320°C.

The same procedure was carried out for the polyamide resins obtained in Examples 2 to 8.

The resin composition pellets obtained above were dried at 160°C for 4 hours. Then, test pieces were prepared using an injection molding machine (available from Sumitomo Heavy Industries, Ltd., SE-130DU).

## Claims

1. A production method of a polyamide resin, the method comprising
polycondensing a diamine and a dicarboxylic acid in a presence of water to make a primary polycondensate, and
increasing a degree of polymerization of the primary polycondensate, wherein
more than 30 mol% of the diamine is a diamine represented by Formula (1), and
20 mol% or higher of the dicarboxylic acid is an aromatic dicarboxylic acid. 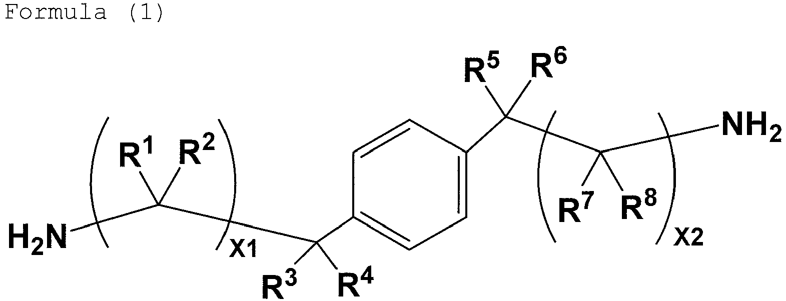
where in Formula (1), R¹ to R⁸ each independently represent a hydrogen atom or an aliphatic group having from 1 to 5 carbons; X1 and X2 are each independently 1 or 2.

2. The production method according to claim 1, wherein stirring in the polycondensation is performed using a stirring blade and with a sealing liquid disposed between a shaft of the stirring blade and a top plate of a reaction vessel to form a seal.

3. The production method of a polyamide resin according to claim 1 or 2, the method comprising adding the diamine and the dicarboxylic acid to a polycondensation reaction system at the same time.

4. The production method of a polyamide resin according to any one of claims 1 to 3, wherein an amount of water added to the polycondensation reaction system is from 28 to 80 mass% relative to a total amount of substances present in the polycondensation reaction system.

5. The production method according to any one of claims 1 to 4, the method comprising removing a part of the water from the polycondensation reaction system and further allowing the polycondensation to proceed.

6. The production method according to any one of claims 1 to 5, wherein the degree of polymerization of the primary polycondensate is increased by solid phase polymerization.

7. The production method according to any one of claims 1 to 6, wherein the polyamide resin comprises diamine-derived structural units and dicarboxylic acid-derived structural units, with 50 mol% or more of the diamine-derived structural units being structural units derived from p-benzenediethanamine and 65 mol% or more of the dicarboxylic acid-derived structural units being structural units derived from an aromatic dicarboxylic acid.

8. The production method according to claim 7, wherein from 65 to 97 mol% of the dicarboxylic acid-derived structural units are structural units derived from an aromatic dicarboxylic acid, and from 3 to 35 mol% of the dicarboxylic acid-derived structural units are structural units derived from an alicyclic dicarboxylic acid.

9. The production method according to any one of claims 1 to 6, wherein the polyamide resin comprises diamine-derived structural units and dicarboxylic acid-derived structural units, with 50 mol% or more of the diamine-derived structural units being structural units derived from p-benzenediethanamine, 20 mol% or more and less than 95 mol% of the dicarboxylic acid-derived structural units being structural units derived from an aromatic dicarboxylic acid, and more than 5 mol% and 80 mol% or less of the dicarboxylic acid-derived structural units being structural units derived from an α,ω-linear aliphatic dicarboxylic acid having from 4 to 15 carbons.

10. The production method according to claim 9, wherein more than 5 mol% and 80 mol% or less of the dicarboxylic acid-derived structural units are structural units derived from a dicarboxylic acid selected from adipic acid and sebacic acid.

11. The production method according to claim 9, wherein from 40 to 90 mol% of the dicarboxylic acid-derived structural units are structural units derived from an aromatic dicarboxylic acid, and from 10 to 60 mol% of the dicarboxylic acid-derived structural units are structural units derived from an α,ω-linear aliphatic dicarboxylic acid having from 4 to 15 carbons.

12. The production method according to any one of claims 1 to 6, wherein
the polyamide resin comprises diamine-derived structural units and dicarboxylic acid-derived structural units,
from 70 to 97 mol% of the diamine-derived structural units being structural units derived from p-benzenediethanamine, from 3 to 30 mol% of the diamine-derived structural units being structural units derived from a diamine represented by Formula (1-1), and
50 mol% or more of the dicarboxylic acid-derived structural units being structural units derived from an aromatic dicarboxylic acid. 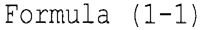 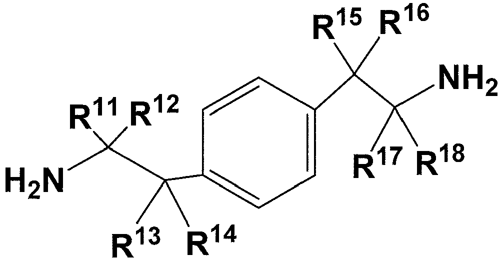
where in Formula (1-1), R¹¹ to R¹⁸ each independently represent a hydrogen atom or an aliphatic group having from 1 to 5 carbons, and at least one of R¹¹ to R¹⁴ and at least one of R¹⁵ to R¹⁸ are each an aliphatic group having from 1 to 5 carbons.

13. The production method according to any one of claims 1 to 6, wherein
the polyamide resin comprises diamine-derived structural units and dicarboxylic acid-derived structural units, with more than 30 mol% of the diamine-derived structural units being structural units derived from a diamine represented by Formula (1-1) and more than 30 mol% of the dicarboxylic acid-derived structural units being structural units derived from an aromatic dicarboxylic acid. 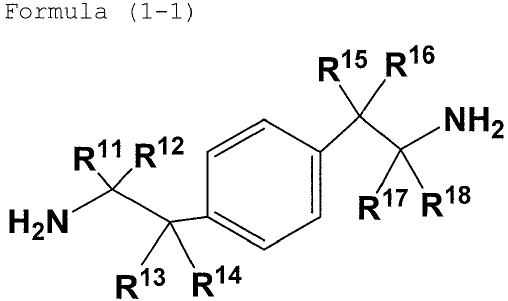
where in Formula (1-1), R¹¹ to R¹⁸ each independently represent a hydrogen atom or an aliphatic group having from 1 to 5 carbons, and at least one of R¹¹ to R¹⁴ and at least one of R¹⁵ to R¹⁸ are each an aliphatic group having from 1 to 5 carbons.

14. The production method according to any one of claims 1 to 6, wherein
the polyamide resin comprises diamine-derived structural units and dicarboxylic acid-derived structural units, with 50 mol% or more of the diamine-derived structural units being structural units derived from a compound represented by Formula (1-2) and more than 50 mol% of structural units of the dicarboxylic acid being structural units derived from an aromatic dicarboxylic acid. 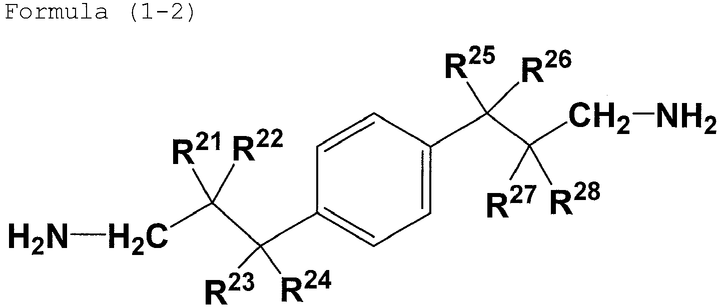
where in Formula (1-2), R²¹ to R²⁸ each independently represent a hydrogen atom or an aliphatic group having from 1 to 5 carbons.

15. A resin composition comprising a polyamide resin and a reinforcing material, the polyamide resin comprising diamine-derived structural units and dicarboxylic acid-derived structural units, with more than 30 mol% of the diamine-derived structural units being structural units represented by Formula (1) and 20 mol% or more of the dicarboxylic acid-derived structural units being structural units derived from an aromatic dicarboxylic acid. 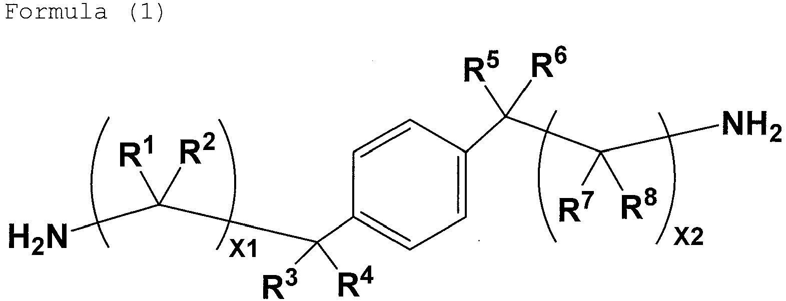 where in Formula (1), R¹ to R⁸ each independently represent a hydrogen atom or an aliphatic group having from 1 to 5 carbons; X1 and X2 are each independently 1 or 2.
